(19) Europäisches Patentamt
European Patent Office
Office européen des brevets

(11) **EP 3 079 423 A1**

(12) **EUROPEAN PATENT APPLICATION**
published in accordance with Art. 153(4) EPC

(43) Date of publication:
**12.10.2016 Bulletin 2016/41**

(51) Int Cl.:
**H04W 72/04** (2009.01)

(21) Application number: **13900750.4**

(86) International application number:
**PCT/CN2013/091069**

(22) Date of filing: **31.12.2013**

(87) International publication number:
**WO 2015/100599 (09.07.2015 Gazette 2015/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **DAI, Mingzeng**
  **Shenzhen**
  **Guangdong 518129 (CN)**

• **HUANG, Qufang**
  **Shenzhen**
  **Guangdong 518129 (CN)**
• **ZHANG, Jian**
  **Shenzhen**
  **Guangdong 518129 (CN)**
• **ZENG, Qinghai**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(54) **CHANNEL SELECTION METHOD AND DEVICE**

(57) The present invention discloses a channel selection method and device and relates to the communications field, so as to resolve a problem of applying an unlicensed spectrum to a wireless cellular network. The channel selection device is configured to acquire a candidate unlicensed channel, determine an available unlicensed channel from the candidate unlicensed channel, where the available unlicensed channel is an unlicensed channel that is not interfered or on which a strength of an interference signal is less than an interference detection threshold, and acquire a first operation channel from the available unlicensed channel, where the first operation channel is a channel on which the secondary serving device performs communication with user equipment in a wireless cellular network mode.

FIG. 17

EP 3 079 423 A1

**Description**

**TECHNICAL FIELD**

The present invention relates to the communications field, and in particular, to a channel selection method and device.

**BACKGROUND**

With rapid development of smartphones, and users' increasing requirements for mobile broadband, data traffic pressure that an existing wireless cellular communications system bears becomes increasingly heavy. Spectrum management (spectrum management) is a spectrum planning method established for effectively using radio frequency. To reduce interference of a wireless communications system, some spectrums may be granted to a mobile operator or a mobile technology (such as UMTS/LTE) for use, and the some spectrums are referred to as licensed spectrums (licensed spectrum). In addition, some spectrums may be allocated to an unlicensed user (such as a home user) for use, and the some spectrums are referred to as unlicensed spectrums (unlicensed spectrum).

Using an unlicensed spectrum to expand a capacity of the wireless cellular communications system is a possible trend. Currently, a Wireless Fidelity (Wireless Fidelity, WiFi for short) system works on unlicensed spectrums such as 2.4 GHz and 5 GHz, and 2.4 GHz has been widely applied to three main fields: industrial (industrial), scientific (scientific), and medical (medical) fields.

Compared with a WiFi technology, a wireless cellular network technology has an advantage of high spectrum utilization. However, how to apply an unlicensed spectrum to a wireless cellular network is an urgent problem that needs to be resolved in the industry.

**SUMMARY**

Embodiments of the present invention provide a channel selection method and device, so as to resolve a problem of applying an unlicensed spectrum to a wireless cellular network.

To resolve the foregoing problem, the following technical solutions are used in the embodiments of the present invention.

According to a first aspect, an embodiment of the present invention provides a serving device, including:

an acquiring module, configured to acquire a candidate unlicensed channel; and
a determining module, configured to determine an available unlicensed channel from the candidate unlicensed channel obtained by the acquiring module, where the available unlicensed channel is an unlicensed channel that is not interfered or on which a strength of an interference signal is less than an interference detection threshold; where

the acquiring module is further configured to acquire a first operation channel from the available unlicensed channel obtained by the determining module, where the first operation channel is a channel on which the serving device performs communication with user equipment in a wireless cellular network mode.

In a first possible implementation manner of the first aspect, the serving device further includes a receiving module, and the receiving module is configured to receive an identifier of a candidate unlicensed channel sent by a primary serving device or an operation administration and maintenance OAM device, or receive an identifier of a manually configured candidate unlicensed channel; and

the acquiring module is specifically configured to:

acquire the candidate unlicensed channel according to the identifier of the candidate unlicensed channel received by the receiving module; and
acquire the first operation channel from the available unlicensed channel.

In the first aspect or the first possible implementation manner of the first aspect, a second possible implementation manner of the first aspect is further provided, the serving device further includes a monitoring module, and the monitoring module is configured to monitor each candidate unlicensed channel; and

the determining module is specifically configured to:

if the monitoring module detects no interference signal on any one of the candidate unlicensed channel in a channel availability check time, or a strength of a detected interference signal does not exceed the interference detection threshold, determine the candidate unlicensed channel as the available unlicensed channel.

In either one of the foregoing two possible implementation manners of the first aspect, a third possible implementation manner of the first aspect is further provided, the serving device further includes a sending module, and the sending module is configured to send an identifier of the available unlicensed channel to the primary serving device; the receiving module is further configured to receive an identifier of the first operation channel sent by the primary serving device; and

the acquiring module is specifically configured to:

acquire the candidate unlicensed channel according to the identifier of the candidate unlicensed channel received by the receiving module; and

determine the first operation channel from the available unlicensed channel according to the identifier of the first operation channel received by the receiving module, or determine the first operation channel from the available unlicensed channel according to a local policy.

In the second or the third possible implementation manner of the first aspect, a fourth possible implementation manner of the first aspect is further provided, the serving device further includes a processing module;

the monitoring module is further configured to monitor the first operation channel; and

the processing module is configured to: if the monitoring module detects an interference signal on the first operation channel, and/or a strength of a detected interference signal exceeds the interference detection threshold, migrate the user equipment to another channel and/or close the first operation channel.

In any one of the second to the fourth possible implementation manners of the first aspect, a fifth possible implementation manner of the first aspect is further provided, the serving device further supports a Wireless Fidelity WiFi mode;

the monitoring module is further configured to monitor a second operation channel on which the serving device performs communication with the user equipment in the WiFi mode;

the sending module is further configured to: if the monitoring module detects an interference signal on the second operation channel, and/or a strength of a detected interference signal exceeds the interference detection threshold, or detects that the second operation channel is busy, send a switch request to the primary serving device, where the switch request is used to request that the serving device needs to switch a communication mode; and

the receiving module is further configured to receive a request reply sent by the primary serving device, where the request reply is used to instruct the serving device to switch to the wireless cellular network mode.

In the first aspect or any one of the foregoing five possible implementation manners of the first aspect, a sixth possible implementation manner of the first aspect is further provided, the serving device is a secondary base station in multi-stream aggregation or a remote radio unit in carrier aggregation.

According to a second aspect, an embodiment of the present invention provides a serving device, including:

a receiving module, configured to receive an identifier of an available unlicensed channel sent by a secondary serving device, where the available unlicensed channel is an unlicensed channel that is not interfered or on which a strength of an interference signal is less than an interference detection threshold; and

a determining module, configured to determine a first operation channel from the available unlicensed channel, where the first operation channel is a channel on which the secondary serving device performs communication with user equipment in a wireless cellular network mode.

In a first possible implementation manner of the second aspect, the serving device further includes a sending module, and the sending module is configured to send an identifier of the first operation channel to the secondary serving device.

In the second aspect or the first possible implementation manner of the second aspect, a second possible implementation manner of the second aspect is further provided, the receiving module is specifically configured to receive identifiers of available unlicensed channels sent by multiple devices, where the multiple devices include at least one secondary serving device and/or at least one WiFi device.

In either one of the foregoing two possible implementation manners of the second aspect, a third possible implementation manner of the second aspect is further provided,

the serving device further includes an acquiring module, and the acquiring module is configured to acquire a candidate unlicensed channel configured by an operation administration and maintenance OAM device, or acquire a manually configured candidate unlicensed channel; and

the sending module is further configured to send an identifier of the candidate unlicensed channel obtained by the acquiring module to the secondary serving device.

In the second aspect or any one of the foregoing three possible implementation manners of the second aspect, a fourth possible implementation manner of the second aspect is further provided, the determining module is specifically configured to:

determine the first operation channel from the available unlicensed channel according to a local policy, or determine the first operation channel from the available unlicensed channels according to the identifiers of the available unlicensed channels sent by the multiple devices.

In any one of the foregoing four possible implementation manners of the second aspect, a fifth possible implementation manner of the second aspect is further provided,
the receiving module is further configured to receive an interference indication sent by the secondary serving device, where the interference indication is used to indicate that the secondary serving device detects an interference signal, and/or a strength of a detected interference signal exceeds the interference detection threshold; and
the sending module is further configured to send an operation command to the secondary serving device, where the operation command is used to notify the secondary serving device of migrating the user equipment to another channel and/or closing the first operation channel.

In any one of the foregoing five possible implementation manners of the second aspect, a sixth possible implementation manner of the second aspect is further provided, the secondary serving device further supports a Wireless Fidelity WiFi mode;
the receiving module is further configured to receive, in a process in which the secondary serving device performs communication with the user equipment on a second operation channel in the WiFi mode, a switch request sent by the secondary serving device, where the switch request is used to request that the secondary serving device needs to switch a communication mode; and
the sending module is further configured to send a request reply to the secondary serving device, where the request reply is used to instruct the secondary serving device to switch to the wireless cellular network mode.

In the second aspect or any one of the foregoing six possible implementation manners of the second aspect, a seventh possible implementation manner of the second aspect is further provided, the serving device is a master base station in multi-stream aggregation or a remote radio unit in carrier aggregation.

According to a third aspect, an embodiment of the present invention provides a channel selection method, including:

acquiring, by a secondary serving device, a candidate unlicensed channel;
determining, by the secondary serving device, an available unlicensed channel from the candidate unlicensed channel, where the available unlicensed channel is an unlicensed channel that is not interfered or on which a strength of an interference signal is less than an interference detection threshold; and
acquiring, by the secondary serving device, a first operation channel from the available unlicensed channel, where the first operation channel is a channel on which the secondary serving device performs communication with user equipment in a wireless cellular network mode.

In a first possible implementation manner of the third aspect, the acquiring, by a secondary serving device, a candidate unlicensed channel includes:

receiving, by the secondary serving device, an identifier of a candidate unlicensed channel sent by a primary serving device or an operation administration and maintenance OAM device, or acquiring, by the secondary serving device, an identifier of a manually configured candidate unlicensed channel.

In the third aspect or the first possible implementation manner of the third aspect, a second possible implementation manner of the third aspect is further provided, the determining, by the secondary serving device, an available unlicensed channel from the candidate unlicensed channel includes:

monitoring, by the secondary serving device, each candidate unlicensed channel; and if no interference signal is detected on any one of the candidate unlicensed channel in a channel availability check time, or a strength of a detected interference signal does not exceed the interference detection threshold, determining the candidate unlicensed channel as the available unlicensed channel.

In the third aspect or either one of the foregoing two possible implementation manners of the third aspect, a third possible implementation manner of the third aspect is further provided, the acquiring, by the secondary serving device, a first operation channel from the available unlicensed channel includes:

sending, by the secondary serving device, an identifier of the available unlicensed channel to the primary serving device, and receiving an identifier of the first operation channel sent by the primary serving device, or
determining, by the secondary serving device, the first operation channel from the available unlicensed channel according to a local policy of the secondary serving device.

In the third aspect or any one of the foregoing three possible implementation manners of the third aspect, a fourth possible implementation manner of the third aspect is further provided, in a process in which the secondary serving device performs communication with the user equipment on the first operation channel in the wireless cellular network mode, the method further includes:

monitoring, by the secondary serving device, the first operation channel; and
if the secondary serving device detects an interference signal on the first operation channel, and/or a strength of a detected interference signal exceeds the interference detection threshold, migrating, by the secondary serving device, the user equipment to another channel and/or closing the first operation channel.

In the fourth possible implementation manner of the third aspect, a fifth possible implementation manner of the third aspect is further provided, the migrating, by the secondary serving device, the user equipment to another channel and/or closing the first operation channel includes:

when the secondary serving device detects an interference signal on the first operation channel, and/or a strength of a detected interference signal exceeds the interference detection threshold, starting a timer; when the timer runs, migrating, by the secondary serving device, the user equipment to another channel; and after the timer expires, closing, by the secondary serving device, the first operation channel; or
when the secondary serving device detects an interference signal on the first operation channel, and/or a strength of a detected interference signal exceeds the interference detection threshold, sending an interference indication to the primary serving device, where the interference indication is used to indicate that the secondary serving device detects an interference signal, and/or a strength of an interference signal detected by the secondary serving device exceeds the interference detection threshold; and receiving, by the secondary serving device, an operation command sent by the primary serving device and executing the operation command, where the operation command is used to notify the secondary serving device of migrating the user equipment to another channel and/or closing the first operation channel.

In the third aspect or any one of the foregoing five possible implementation manners of the third aspect, a sixth possible implementation manner of the third aspect is further provided, the secondary serving device further supports a Wireless Fidelity WiFi mode, and before the acquiring, by a secondary serving device, a candidate unlicensed channel, the method further includes:

monitoring, by the secondary serving device, a second operation channel on which the secondary serving device performs communication with the user equipment in the WiFi mode;
if an interference signal is detected on the second operation channel, and/or a strength of a detected interference signal exceeds the interference detection threshold, or it is detected that the second operation channel is busy, sending a switch request to the primary serving device, where the switch request is used to request that the secondary serving device needs to switch a communication mode; and
receiving, by the secondary serving device, a request reply sent by the primary serving device, where the request reply is used to instruct the secondary serving device to switch to the wireless cellular network mode.

In the third aspect or any one of the foregoing six possible implementation manners of the third aspect, a seventh possible implementation manner of the third aspect is further provided, the secondary serving device is a secondary base station in multi-stream aggregation or a remote radio unit in carrier aggregation.
In the third aspect or any one of the foregoing seven possible implementation manners of the third aspect, an eighth possible implementation manner of the third aspect is further provided, the primary serving device is a master base station in the multi-stream aggregation or a remote radio unit in the carrier aggregation.
According to a fourth aspect, an embodiment of the present invention provides a channel selection method, including:

receiving, by a primary serving device, an identifier of an available unlicensed channel sent by a secondary serving device, where the available unlicensed channel is an unlicensed channel that is not interfered or on which a strength of an interference signal is less than an interference detection threshold; and
determining, by the primary serving device, a first operation channel from the available unlicensed channel, where the first operation channel is a channel on which the secondary serving device performs communication with user equipment in a wireless cellular network mode.

In a first possible implementation manner of the fourth aspect, after the determining, by the primary serving device, a first operation channel from the available unlicensed channel, the method further includes: sending, by the primary serving device, an identifier of the first operation channel to the secondary serving device.

In the fourth aspect or the first possible implementation manner of the fourth aspect, a second possible implementation manner of the fourth aspect is further provided, the receiving, by a primary serving device, an identifier of an available unlicensed channel sent by a secondary serving device includes:

receiving, by the primary serving device, identifiers of available unlicensed channels sent by multiple devices, where the multiple devices include at least one secondary serving device and/or at least one WiFi device.

In the fourth aspect or either one of the foregoing two possible implementation manners of the fourth aspect, a third possible implementation manner of the fourth aspect is further provided, before the receiving, by a primary serving device, an identifier of an available unlicensed channel sent by the secondary serving device, the method further includes:

acquiring, by the primary serving device, a candidate unlicensed channel configured by an operation administration and maintenance OAM device, or acquiring a manually configured candidate unlicensed channel; and
sending, by the primary serving device, an identifier of the candidate unlicensed channel to the secondary serving device.

In the fourth aspect or any one of the foregoing three possible implementation manners of the fourth aspect, a fourth possible implementation manner of the fourth aspect is further provided, the determining, by the primary serving device, a first operation channel from the available unlicensed channel includes:

determining, by the primary serving device, the first operation channel from the available unlicensed channel according to a local policy of the primary serving device, or determining the first operation channel from the available unlicensed channels according to the identifiers of the available unlicensed channels sent by the multiple devices.

In the fourth aspect or any one of the foregoing four possible implementation manners of the fourth aspect, a fifth possible implementation manner of the fourth aspect is further provided, after the sending, by the primary serving device, an identifier of the first operation channel to the secondary serving device, the method further includes:

receiving, by the primary serving device, an interference indication sent by the secondary serving device, where the interference indication is used to indicate that the secondary serving device detects an interference signal, and/or a strength of a detected interference signal exceeds the interference detection threshold; and
sending, by the primary serving device, an operation command to the secondary serving device, where the operation command is used to notify the secondary serving device of migrating the user equipment to another channel and/or closing the first operation channel.

In the fourth aspect or any one of the foregoing five possible implementation manners of the fourth aspect, a sixth possible implementation manner of the fourth aspect is further provided, the secondary serving device further supports a Wireless Fidelity WiFi mode, and before the receiving, by a primary serving device, an identifier of an available unlicensed channel sent by a secondary serving device, the method further includes:

in a process in which the secondary serving device performs communication with the user equipment on a second operation channel in the WiFi mode, receiving, by the primary serving device, a switch request sent by the secondary serving device, where the switch request is used to request that the secondary serving device needs to switch a communication mode; and
sending, by the primary serving device, a request reply to the secondary serving device, where the request reply is used to instruct the secondary serving device to switch to the wireless cellular network mode.

In the fourth aspect or any one of the foregoing six possible implementation manners of the fourth aspect, a seventh possible implementation manner of the fourth aspect is further provided, the primary serving device is a master base station in multi-stream aggregation or a remote radio unit in carrier aggregation.

In the fourth aspect or any one of the foregoing seven possible implementation manners of the fourth aspect, an eighth possible implementation manner of the fourth aspect is further provided, the secondary serving device is a secondary base station in the multi-stream aggregation or a remote radio unit in the carrier aggregation.

The embodiments of the present invention provide a channel selection method and device. A candidate unlicensed channel is acquired, an available unlicensed channel is determined from the candidate unlicensed channel, and a first operation channel is acquired from the available unlicensed channel, so that a secondary serving device performs operation on the first operation channel and enters an in-service state. Further, after entering the in-service state, the secondary serving device monitors the first operation channel; and if the secondary serving device detects an interference signal on the first operation channel, and/or a strength of a detected interference signal exceeds an interference detection threshold, the secondary serving device migrates user equipment to another channel and/or closes the first operation channel, so as to resolve a problem of applying an unlicensed spectrum to a wireless cellular network.

BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a schematic scenario diagram 1 of a channel selection method according to an embodiment of the present invention;
FIG. 2 is a schematic scenario diagram 2 of a channel selection method according to an embodiment of the present invention;
FIG. 3 is a schematic diagram of an entity apparatus of a serving device described in Embodiment 1 according to an embodiment of the present invention;
FIG. 4 is a schematic diagram of an entity apparatus of a serving device described in Embodiment 2 according to an embodiment of the present invention;
FIG. 5 is a schematic diagram of an entity apparatus of a serving device described in Embodiment 3 according to an embodiment of the present invention;
FIG. 6 is a schematic diagram of an entity apparatus of a serving device described in Embodiment 4 according to an embodiment of the present invention;
FIG. 7 is a schematic diagram 1 of an apparatus of a serving device described in Embodiment 5 according to an embodiment of the present invention;
FIG. 8 is a schematic diagram 2 of an apparatus of a serving device described in Embodiment 5 according to an embodiment of the present invention;
FIG. 9 is a schematic diagram 1 of an apparatus of a serving device described in Embodiment 6 according to an embodiment of the present invention;
FIG. 10 is a schematic diagram 2 of an apparatus of a serving device described in Embodiment 6 according to an embodiment of the present invention;
FIG. 11 is a schematic diagram of an apparatus of a serving device described in Embodiment 7 according to an embodiment of the present invention;
FIG. 12 is a schematic diagram of an apparatus of a serving device described in Embodiment 8 according to an embodiment of the present invention;
FIG. 13 is a schematic diagram of a channel selection method provided in Embodiment 9 according to an embodiment of the present invention;
FIG. 14 is a schematic diagram of a channel selection method provided in Embodiment 10 according to an embodiment of the present invention;
FIG. 15 is a schematic diagram of a channel selection method provided in Embodiment 11 according to an embodiment of the present invention;
FIG. 16 is a schematic diagram of a channel selection method provided in Embodiment 12 according to an embodiment of the present invention;
FIG. 17 is a schematic flowchart of a channel selection method according to an embodiment of the present invention; and
FIG. 18 is a schematic flowchart of another channel selection method according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

To facilitate understanding of embodiments of the present invention, related terms and application scenarios in descriptions of the embodiments of the present invention are first described herein.

A wireless cellular network mainly includes a mobile station, a base station subsystem, and a network subsystem. The mobile station is a network terminal device such as a mobile phone or some cellular industrial control devices; the base station subsystem is a mobile base station, a wireless transmit/receive device, a private network (generally an optical fiber), a wireless digital devices, or the like, and the base station subsystem may be considered as a converter between a wireless network and a wired network. Common types of a cellular network are: the Global System for Mobile Communications (Global System for Mobile Communications, GSM for short), a Code Division Multiple Access (Code Division Multiple Access, CDMA for short) network, a 3G network, a Frequency Division Multiple Access (frequency division multiple access, FDMA for short) network, a Time Division Multiple Access (Time Division Multiple Access, TDMA for short) network, the Advanced Mobile Phone System (Advanced Mobile Phone System, AMPS for short), and the like.

Long Term Evolution (Long Term Evolution, LTE for short) is long term evolution of a Universal Mobile Telecommunications System (Universal Mobile Telecommunications System, UMTS for short) technology that is developed by the 3rd Generation Partnership Project (3rd Generation Partnership Project, 3GPP for short), is transition between a 3G technology and a 4G technology, uses OFDM and MIMO as unique standards of wireless network evolution, and belongs to the cellular network.

An application scenario applied in embodiments of the present invention may be:

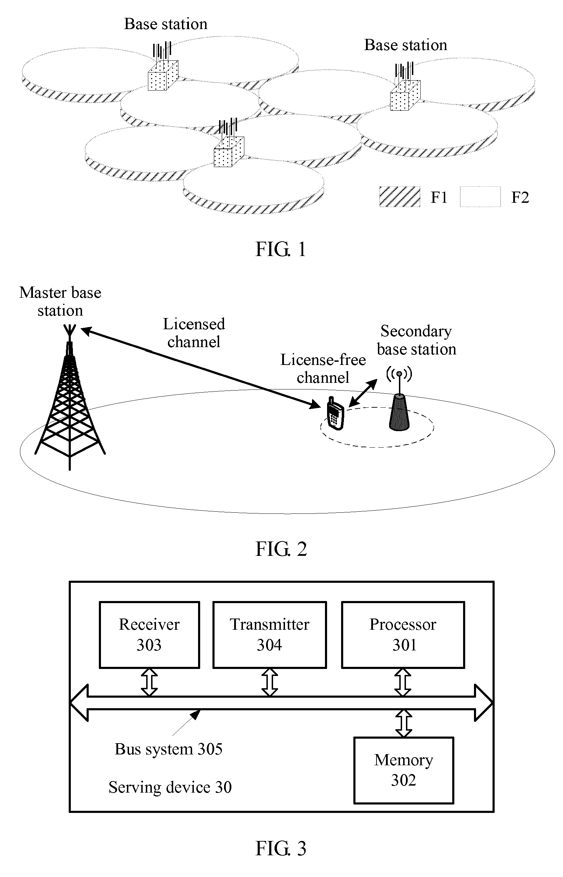

Scenario A: An unlicensed channel is used as a secondary serving cell in a carrier aggregation (Carrier Aggregation, CA for short) technology. The CA technology is used to aggregate multiple component carriers to form a higher bandwidth, to implement that uplink and downlink peak rates and uplink and downlink edge rates increase manifold, and implement that a cell capacity increases manifold. For example, four cells of 20 MHz are aggregated into a bandwidth of 80 MHz. In the CA technology, one primary serving cell (Primary Cell) and at least one secondary serving cell (Secondary Component) need to be configured for each user equipment. The primary serving cell is mainly used for mobility management, scheduling, and the like, and the secondary serving cell is mainly used for data transmission and increase a transmission rate. As shown in FIG. 1, a carrier spectrum F1 (shown by oblique lines in FIG. 2) and a carrier spectrum F2 (shown by white filling in FIG. 2) are aggregated to form a higher bandwidth.

Scenario B: An unlicensed channel is used as a secondary base station in a dual connectivity (Dual Connectivity, DC for short)/multi-stream aggregation (Multiple Stream Aggregation, MSA for short) technology. The DC/MSA technology refers to a carrier aggregation technology used between two base stations, that is, an aggregation technology used between a master base station and a secondary base station, which may resolve a scenario of non-ideal resource transmission between sites. As shown in FIG. 2, a licensed channel is used between a master base station and user equipment, and a license-free channel is used between a secondary base station and the user equipment. A coverage area of the master base station is shown by a solid line in FIG. 2, and a coverage area of the secondary base station is shown by a dashed line in FIG. 2.

It should be noted that, in the embodiments of the present invention, the primary serving device is a primary serving cell that uses the CA technology, and the secondary serving device is a secondary serving cell that uses the CA technology; or the primary serving device is a master base station that uses the DC/MSA technology, and the secondary serving device is a secondary base station that uses the DC/MSA technology.

**Embodiment 1**

An embodiment of the present invention provides a serving device, the serving device is a secondary serving device, and the secondary serving device is a secondary serving cell that uses a CA technology in the foregoing scenario A, or a secondary base station that uses a DC/MSA technology in the foregoing scenario B. As shown in FIG. 3, the serving device 30 includes a processor 301, a memory 302, a receiver 303, a transmitter 304, and a bus system 305.

Components (the processor 301, the memory 302, the receiver 303, and the transmitter 304) of the serving device 30 are coupled together by using the bus system 305, where in addition to a data bus, the bus system 305 may further include a power bus, a control bus, and a status signal bus, and the like. However, for clarity of description, various buses are marked as the bus system 305 in FIG. 3.

The memory 302 may include a read-only memory and/or a random access memory, and provide an instruction and data to the processor 301. A part of the memory 302 may further include a nonvolatile random access memory 302 (NVRAM).

The memory 302 stores the following elements: an executable module or a data structure, or a subset thereof, or an extended set thereof:

operation instructions, including various operation instructions, used to implement various operations; and

an operating system, including various system programs, used to implement various basic services and process hardware-based tasks.

By invoking an operation instruction (the operation instruction may be stored in the operating system) stored in the memory 302, the processor 301 executes the following operations: acquiring a candidate unlicensed channel; determining an available unlicensed channel from the candidate unlicensed channel, where the available unlicensed channel is an unlicensed channel that is not interfered or on which a strength of an interference signal is less than an interference detection threshold; and acquiring a first operation channel from the available unlicensed channel, where the first operation channel is a channel on which the serving device performs communication with user equipment in a wireless cellular network mode.

Optionally, the receiver 303 is configured to receive an identifier of a candidate unlicensed channel sent by a primary serving device or an operation administration and maintenance OAM device, or receive an identifier of a manually configured candidate unlicensed channel.

The processor 301 is specifically configured to: acquire the candidate unlicensed channel according to the identifier of the candidate unlicensed channel obtained by the receiver 303;

determine the available unlicensed channel from the candidate unlicensed channel; and

acquire the first operation channel from the available unlicensed channel.

Optionally, the processor 301 is specifically configured to:

determine the candidate unlicensed channel;

monitor each candidate unlicensed channel; and if no interference signal is detected on any one of the candidate unlicensed channel in a channel availability check time, or a strength of a detected interference signal does not exceed the interference detection threshold, determine the candidate unlicensed channel as the available unlicensed channel; and

determine the first operation channel from the available unlicensed channel.

Optionally, the transmitter 304 is configured to send an identifier of the available unlicensed channel to the primary serving device, and the receiver 303 is configured to receive an identifier of the first operation channel sent by the primary serving device.

The processor 301 is specifically configured to:

determine the candidate unlicensed channel;

determine the available unlicensed channel from the candidate unlicensed channel; and

determine the first operation channel from the available unlicensed channel according to the identifier of the first operation channel received by the receiver 303, or determine the first operation channel from the available unlicensed channel according to a local policy.

Optionally, the processor 301 is further configured to: monitor the first operation channel; and if an interference signal is detected on the first operation channel, and/or a strength of a detected interference signal exceeds the interference detection threshold, migrate the user equipment to another channel and/or close the first operation channel.

Optionally, the serving device further supports a Wireless Fidelity WiFi mode.

The processor 301 is further configured to monitor a second operation channel on which the serving device performs communication with the user equipment in the WiFi mode.

The transmitter 304 is further configured to: if the processor 301 detects an interference signal on the second operation channel, and/or a strength of a detected interference signal exceeds the interference detection threshold, or detects that the second operation channel is busy, send a switch request to the primary serving device, where the switch request is used to request that the serving device needs to switch a communication mode.

The receiver 303 is further configured to receive a request reply sent by the primary serving device, where the request reply is used to instruct the serving device to switch to the wireless cellular network mode.

Optionally, the serving device is the secondary base station in multi-stream aggregation or a remote radio unit in carrier aggregation.

This embodiment of the present invention provides a serving device used for channel selection. The serving device acquires a candidate unlicensed channel; determines an available unlicensed channel from the candidate unlicensed channel, where the available unlicensed channel is an unlicensed channel that is not interfered or on which a strength of an interference signal is less than an interference detection threshold; and acquires a first operation channel from the available unlicensed channel, where the first operation channel is a channel on which the serving device performs communication with user equipment in a wireless cellular network mode, so as to resolve a problem of applying an unlicensed spectrum to a wireless cellular network.

**Embodiment 2**

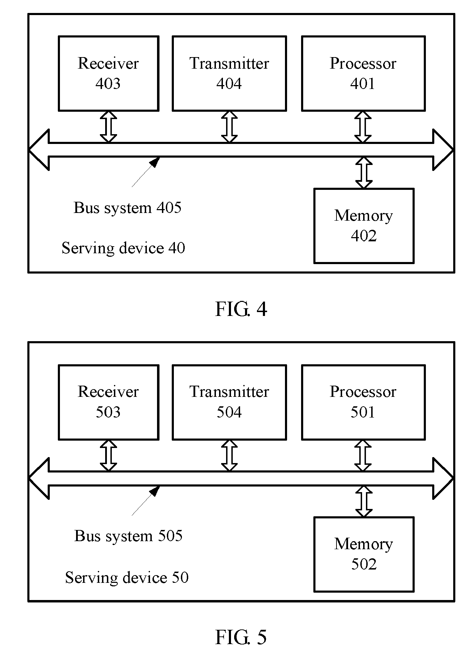

An embodiment of the present invention provides a serving device, the serving device is a primary serving device, and the primary serving device is a primary serving cell that uses a CA technology in the foregoing scenario A, or a master base station that uses a DC/MSA technology in the foregoing scenario B. As shown in FIG. 4, the serving device 40 includes a processor 401, a memory 402, a receiver 403, a transmitter 404, and a bus system 405.

Components (the processor 401, the memory 402, the receiver 403, and the transmitter 404) of the serving device 40 are coupled together by using the bus system 405, where in addition to a data bus, the bus system 405 may further include a power bus, a control bus, and a status signal bus, and the like. However, for clarity of description, various buses are marked as the bus system 405 in FIG. 4.

The memory 402 may include a read-only memory and/or a random access memory, and provide an instruction and data to the processor 401. A part of the memory 402 may further include a nonvolatile random access memory 402 (NVRAM).

The memory 402 stores the following elements: an executable module or a data structure, or a subset thereof, or an extended set thereof:

operation instructions, including various operation instructions, used to implement various operations; and
an operating system, including various system programs, used to implement various basic services and process hardware-based tasks.

The receiver 403 is configured to receive an identifier of an available unlicensed channel sent by a secondary serving device, where the available unlicensed channel is an unlicensed channel that is not interfered or on which a strength of an interference signal is less than an interference detection threshold.

By invoking an operation instruction (the operation instruction may be stored in the operating system) stored in the memory 402, the processor 401 executes the following operation: determining a first operation channel from the available unlicensed channel, where the first operation channel is a channel on which the secondary serving device performs communication with user equipment in a wireless cellular network mode.

Optionally, the transmitter 404 is configured to send an identifier of the first operation channel to the secondary serving device.

Optionally, the receiver 403 is specifically configured to receive identifiers of available unlicensed channels sent by multiple devices, where the multiple devices include at least one secondary serving device and/or at least one WiFi device.

Optionally, the processor 401 is further configured to acquire a candidate unlicensed channel configured by an operation administration and maintenance OAM device, or acquire a manually configured candidate unlicensed channel.

The transmitter 404 is further configured to send an identifier of the candidate unlicensed channel to the secondary serving device.

Optionally, the processor 401 is specifically configured to:

determine the first operation channel from the available unlicensed channel according to a local policy.

Optionally, the receiver 403 is further configured to receive an interference indication sent by the secondary serving device, where the interference indication is used to indicate that the secondary serving device detects an interference signal, and/or a strength of a detected interference signal exceeds the interference detection threshold.

The transmitter 404 is further configured to send an operation command to the secondary serving device, where the operation command is used to notify the secondary serving device of migrating the user equipment to another channel and/or closing the first operation channel.

Optionally, the secondary serving device further supports a Wireless Fidelity WiFi mode.

The receiver 403 is further configured to receive, in a process in which the secondary serving device performs communication with the user equipment on a second operation channel in the WiFi mode, a switch request sent by the secondary serving device, where the switch request is used to request that the secondary serving device needs to switch a communication mode.

The transmitter 404 is further configured to send a request reply to the secondary serving device, where the request reply is used to instruct the secondary serving device to switch to the wireless cellular network mode.

Optionally, the serving device is the master base station in multi-stream aggregation or a remote radio unit in carrier aggregation.

This embodiment of the present invention provides a serving device used for channel selection. The serving device receives an identifier of an available unlicensed channel sent by a secondary serving device, where the available unlicensed channel is an unlicensed channel that is not interfered or on which a strength of an interference signal is less than an interference detection threshold; and determines a first operation channel from the available unlicensed channel, where the first operation channel is a channel on which the secondary serving device performs communication with user equipment in a wireless cellular network mode, so as to resolve a problem of applying an unlicensed spectrum to a wireless cellular network.

## Embodiment 3

An embodiment of the present invention provides a serving device, the serving device is a secondary serving device, and the secondary serving device is a secondary serving cell that uses a CA technology in the foregoing scenario A, or a secondary base station that uses a DC/MSA technology in the foregoing scenario B. As shown in FIG. 5, the serving device 50 includes a processor 501, a memory 502, a receiver 505, a transmitter 504, and a bus system 505.
Components (the processor 501, the memory 502, the receiver 505, and the transmitter 504) of the serving device 50 are coupled together by using the bus system 505, where in addition to a data bus, the bus system 505 may further include a power bus, a control bus, and a status signal bus, and the like. However, for clarity of description, various buses are marked as the bus system 505 in FIG. 5.
The memory 502 may include a read-only memory and/or a random access memory, and provide an instruction and data to the processor 501. A part of the memory 502 may further include a nonvolatile random access memory 502 (NVRAM).
The memory 502 stores the following elements: an executable module or a data structure, or a subset thereof, or an extended set thereof:

operation instructions, including various operation instructions, used to implement various operations; and
an operating system, including various system programs, used to implement various basic services and process hardware-based tasks.

By invoking an operation instruction (the operation instruction may be stored in the operating system) stored in the memory 502, the processor 501 executes the following operation: monitoring a second operation channel on which the serving device performs communication with user equipment in a Wireless Fidelity WiFi mode.
The transmitter 504 is configured to: if the processor 501 detects an interference signal on the second operation channel, and/or a strength of a detected interference signal exceeds an interference detection threshold, or detects that the second operation channel is busy, send a switch request to a primary serving device, where the switch request is used to request that the serving device needs to switch a communication mode.
The receiver 503 is configured to receive a request reply message sent by the primary serving device, where the request reply message is used to instruct the serving device to switch to a wireless cellular network mode, and includes an identifier of a first operation channel, and the first operation channel is a channel on which the serving device performs communication with the user equipment in the wireless cellular network mode, and is an unlicensed channel that is not interfered or on which a strength of an interference signal is less than the interference detection threshold.
Optionally, the identifier of the first operation channel is an identifier of a downlink channel, or the identifier of the first operation channel includes an identifier of an uplink channel and an identifier of a downlink channel.
Optionally, the serving device 50 is the secondary base station in multi-stream aggregation or a remote radio unit in carrier aggregation.
This embodiment of the present invention provides a serving device used for channel selection. The serving device monitors a second operation channel on which the serving device performs communication with user equipment in a Wireless Fidelity WiFi mode; and if an interference signal is detected on the second operation channel, and/or a strength of a detected interference signal exceeds an interference detection threshold, or it is detected that the second operation channel is busy, the serving device sends a switch request to a primary serving device, where the switch request is used to request that the secondary serving device needs to switch a communication mode. The serving device receives a request reply sent by the primary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than the interference detection threshold, so as to resolve a problem of applying an unlicensed spectrum to a wireless cellular network.

## Embodiment 4

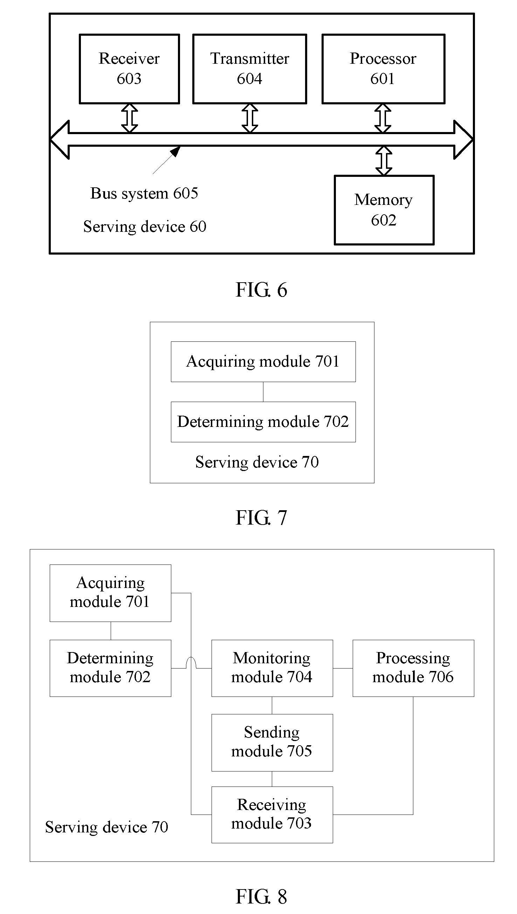

An embodiment of the present invention provides a serving device, the serving device is a primary serving device, and the primary serving device is a primary serving cell that uses a CA technology in the foregoing scenario A, or a master base station that uses a DC/MSA technology in the foregoing scenario B. As shown in FIG. 6, the serving device 60 includes a processor 601, a memory 602, a receiver 603, a transmitter 604, and a bus system 605.

Components (the processor 601, the memory 602, the receiver 603, and the transmitter 604) of the serving device 60 are coupled together by using the bus system 605, where in addition to a data bus, the bus system 605 may further include a power bus, a control bus, and a status signal bus, and the like. However, for clarity of description, various buses are marked as the bus system 605 in FIG. 6.

The memory 602 may include a read-only memory and/or a random access memory, and provide an instruction and data to the processor 601. A part of the memory 602 may further include a nonvolatile random access memory 602 (NVRAM).

The memory 602 stores the following elements: an executable module or a data structure, or a subset thereof, or an extended set thereof:

operation instructions, including various operation instructions, used to implement various operations; and
an operating system, including various system programs, used to implement various basic services and process hardware-based tasks.

The receiver 603 is configured to receive, in a process in which a secondary serving device performs communication with user equipment on a second operation channel in a Wireless Fidelity WiFi mode, a switch request sent by the secondary serving device, where the switch request is used to request that the secondary serving device needs to switch a communication mode.

By invoking an operation instruction (the operation instruction may be stored in the operating system) stored in the memory 602, the processor 601 generates a request reply according to the switch request received by the receiver.

The transmitter 604 is configured to send the request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold.

Optionally, the identifier of the first operation channel is an identifier of a downlink channel, or the identifier of the first operation channel includes an identifier of an uplink channel and an identifier of a downlink channel.

Optionally, the serving device 60 is the master base station in multi-stream aggregation or a remote radio unit in carrier aggregation.

This embodiment of the present invention provides a serving device used for channel selection. In a process in which a secondary serving device performs communication with user equipment on a second operation channel in a Wireless Fidelity WiFi mode, a primary serving device receives a switch request sent by the secondary serving device, where the switch request is used to request that the secondary serving device needs to switch a communication mode. The primary serving device sends a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold, so as to resolve a problem of applying an unlicensed spectrum to a wireless cellular network.

**Embodiment 5**

An embodiment of the present invention provides a serving device, the serving device is a secondary serving device, and the secondary serving device is a secondary serving cell that uses a CA technology in the foregoing scenario A, or a secondary base station that uses a DC/MSA technology in the foregoing scenario B. As shown in FIG. 7, the serving device 70 includes:

an acquiring module 701, configured to acquire a candidate unlicensed channel; and
a determining module 702, configured to determine an available unlicensed channel from the candidate unlicensed channel obtained by the acquiring module 701, where the available unlicensed channel is an unlicensed channel that is not interfered or on which a strength of an interference signal is less than an interference detection threshold.

The acquiring module 701 is further configured to acquire a first operation channel from the available unlicensed channel obtained by the determining module 702, where the first operation channel is a channel on which the serving device performs communication with user equipment in a wireless cellular network mode.

Optionally, as shown in FIG. 8, the serving device 70 further includes a receiving module 703, and the receiving module 703 is configured to receive an identifier of a candidate unlicensed channel sent by a primary serving device or an operation administration and maintenance OAM device, or receive an identifier of a manually configured candidate unlicensed channel.

The acquiring module 701 is specifically configured to:

acquire the candidate unlicensed channel according to the identifier of the candidate unlicensed channel received by the receiving module 703; and
acquire the first operation channel from the available unlicensed channel.

Optionally, as shown in FIG. 8, the serving device 70 further includes a monitoring module 704, and the monitoring module 704 is configured to monitor each candidate unlicensed channel.

The determining module 702 is specifically configured to:

if the monitoring module 704 detects no interference signal on any one of the candidate unlicensed channel in a channel availability check time, or a strength of a detected interference signal does not exceed the interference detection threshold, determine the candidate unlicensed channel as the available unlicensed channel.

Optionally, as shown in FIG. 8, the serving device 70 further includes a sending module 705, and the sending module 705 is configured to send an identifier of the available unlicensed channel to the primary serving device.

The receiving module 703 is further configured to receive an identifier of the first operation channel sent by the primary serving device.

The acquiring module 701 is specifically configured to:

acquire the candidate unlicensed channel according to the identifier of the candidate unlicensed channel received by the receiving module 703; and
determine the first operation channel from the available unlicensed channel according to the identifier of the first operation channel received by the receiving module 703, or determine the first operation channel from the available unlicensed channel according to a local policy.

Optionally, as shown in FIG. 8, the serving device 70 further includes a processing module 706.

The monitoring module 704 is further configured to monitor the first operation channel.

The processing module 706 is configured to: if the monitoring module 704 detects an interference signal on the first operation channel, and/or a strength of a detected interference signal exceeds the interference detection threshold, migrate the user equipment to another channel and/or close the first operation channel.

Optionally, the serving device 70 further supports a Wireless Fidelity WiFi mode.

The monitoring module 704 is further configured to monitor a second operation channel on which the serving device 70 performs communication with the user equipment in the WiFi mode.

The sending module 705 is further configured to: if the monitoring module 704 detects an interference signal on the second operation channel, and/or a strength of a detected interference signal exceeds the interference detection threshold, or detects that the second operation channel is busy, send a switch request to the primary serving device, where the switch request is used to request that the serving device needs to switch a communication mode.

The receiving module 703 is further configured to receive a request reply sent by the primary serving device, where the request reply is used to instruct the serving device to switch to the wireless cellular network mode.

Optionally, the serving device 70 is the secondary base station in multi-stream aggregation or a remote radio unit in carrier aggregation.

This embodiment of the present invention provides a serving device used for channel selection. The serving device acquires a candidate unlicensed channel; determines an available unlicensed channel from the candidate unlicensed channel, where the available unlicensed channel is an unlicensed channel that is not interfered or on which a strength of an interference signal is less than an interference detection threshold; and acquires a first operation channel from the available unlicensed channel, where the first operation channel is a channel on which the serving device performs communication with user equipment in a wireless cellular network mode, so as to resolve a problem of applying an unlicensed spectrum to a wireless cellular network.

**Embodiment 6**

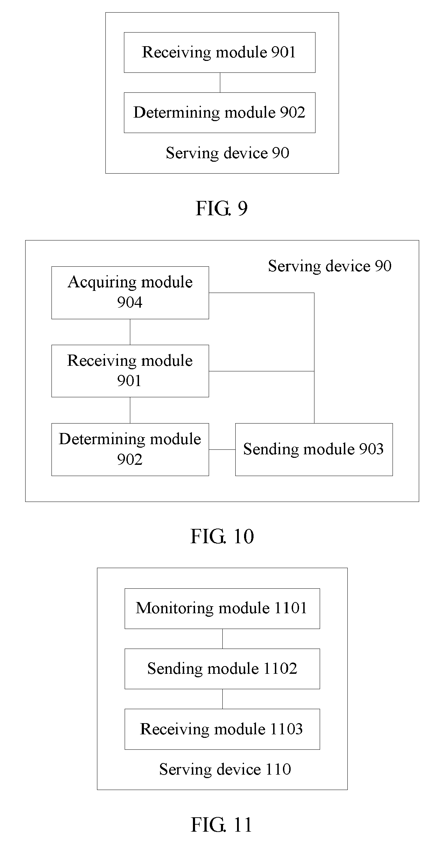

An embodiment of the present invention provides a serving device, the serving device is a primary serving device, and the primary serving device is a primary serving cell that uses a CA technology in the foregoing scenario A, or a master base station that uses a DC/MSA technology in the foregoing scenario B. As shown in FIG. 9, the serving device 90 includes:

a receiving module 901, configured to receive an identifier of an available unlicensed channel sent by a secondary serving device, where the available unlicensed channel is an unlicensed channel that is not interfered or on which a strength of an interference signal is less than an interference detection threshold; and
a determining module 902, configured to determine a first operation channel from the available unlicensed channel, where the first operation channel is a channel on which the secondary serving device performs communication with user equipment in a wireless cellular network mode.

Optionally, as shown in FIG. 10, the serving device 90 further includes a sending module 903, and the sending module 903 is configured to send an identifier of the first operation channel to the secondary serving device.

Optionally, the receiving module 901 is specifically configured to receive identifies of available unlicensed channels sent by multiple devices, where the multiple devices include at least one secondary serving device and/or at least one WiFi device.

Optionally, as shown in FIG. 10, the serving device 90 further includes an acquiring module 904, and the acquiring module 904 is configured to acquire a candidate unlicensed channel configured by an operation administration and maintenance OAM device, or acquire a manually configured candidate unlicensed channel.

The sending module 903 is further configured to send an identifier of the candidate unlicensed channel obtained by the acquiring module to the secondary serving device.

The receiving module 901 is configured to receive the identifier that is of the available unlicensed channel determined from the candidate unlicensed channel and that is sent by the secondary serving device.

Optionally, the determining module 902 is specifically configured to:

determine the first operation channel from the available unlicensed channel according to a local policy, or determine the first operation channel from the available unlicensed channels according to the identifiers of the available unlicensed channels sent by the multiple devices.

Optionally, the receiving module 901 is further configured to receive an interference indication sent by the secondary serving device, where the interference indication is used to indicate that the secondary serving device detects an interference signal, and/or a strength of a detected interference signal exceeds the interference detection threshold.

The sending module 903 is further configured to send an operation command to the secondary serving device, where the operation command is used to notify the secondary serving device of migrating the user equipment to another channel and/or closing the first operation channel.

Optionally, the secondary serving device further supports a Wireless Fidelity WiFi mode.

The receiving module 901 is further configured to receive, in a process in which the secondary serving device performs communication with the user equipment on a second operation channel in the WiFi mode, a switch request sent by the secondary serving device, where the switch request is used to request that the secondary serving device needs to switch a communication mode.

The sending module 903 is further configured to send a request reply to the secondary serving device, where the request reply is used to instruct the secondary serving device to switch to the wireless cellular network mode.

Optionally, the serving device 90 is the master base station in multi-stream aggregation or a remote radio unit in carrier aggregation.

This embodiment of the present invention provides a serving device used for channel selection. The serving device receives an identifier of an available unlicensed channel sent by a secondary serving device, where the available unlicensed channel is an unlicensed channel that is not interfered or on which a strength of an interference signal is less than an interference detection threshold; and determines a first operation channel from the available unlicensed channel, where the first operation channel is a channel on which the secondary serving device performs communication with user equipment in a wireless cellular network mode, so as to resolve a problem of applying an unlicensed spectrum to a wireless cellular network.

**Embodiment 7**

An embodiment of the present invention provides a serving device, the serving device is a secondary serving device, and the secondary serving device is a secondary serving cell that uses a CA technology in the foregoing scenario A, or a secondary base station that uses a DC/MSA technology in the foregoing scenario B. As shown in FIG. 11, the serving device 100 includes:

a monitoring module 1101, configured to monitor a second operation channel on which the serving device 110 performs communication with the user equipment in a Wireless Fidelity WiFi mode;

a sending module 1102, configured to: if the monitoring module 1101 detects an interference signal on the second operation channel, and/or a strength of a detected interference signal exceeds an interference detection threshold, or detects that the second operation channel is busy, send a switch request to a primary serving device, where the switch request is used to request that the secondary serving device needs to switch a communication mode; and

a receiving module 1103, configured to receive a request reply sent by the primary serving device, where the request reply is used to instruct the serving device to switch to a wireless cellular network mode, and includes an identifier of a first operation channel, and the first operation channel is a channel on which the serving device performs communication with the user equipment in the wireless cellular network mode, and is an unlicensed channel that is not interfered or on which a strength of an interference signal is less than the interference detection threshold.

Optionally, the identifier of the first operation channel is an identifier of a downlink channel, or the identifier of the first operation channel includes an identifier of an uplink channel and an identifier of a downlink channel.

Optionally, the serving device 110 is the secondary base station in multi-stream aggregation or a remote radio unit in carrier aggregation.

This embodiment of the present invention provides a serving device used for channel selection. The serving device monitors a second operation channel on which the serving device performs communication with user equipment in a Wireless Fidelity WiFi mode; and if an interference signal is detected on the second operation channel, and/or a strength of a detected interference signal exceeds an interference detection threshold, or it is detected that the second operation channel is busy, the serving device sends a switch request to a primary serving device, where the switch request is used to request that the secondary serving device needs to switch a communication mode. The serving device receives a request reply sent by the primary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than the interference detection threshold, so as to resolve a problem of applying an unlicensed spectrum to a wireless cellular network.

**Embodiment 8**

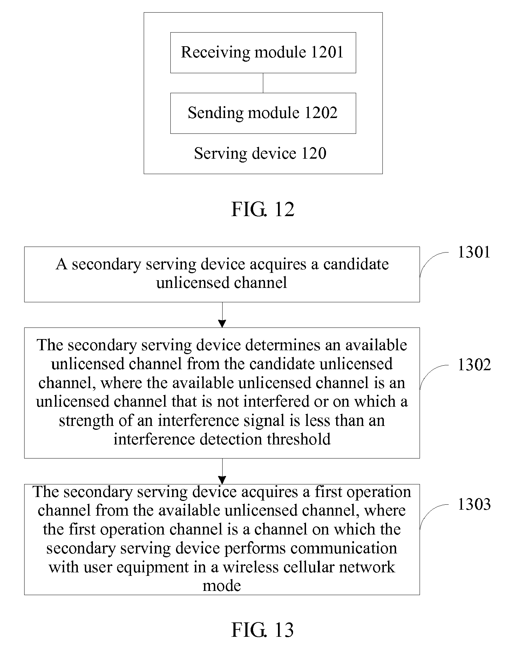

An embodiment of the present invention provides a serving device, the serving device is a primary serving device, and the primary serving device is a primary serving cell that uses a CA technology in the foregoing scenario A, or a master base station that uses a DC/MSA technology in the foregoing scenario B. As shown in FIG. 12, the serving device 120 includes:

a receiving module 1201, configured to receive, in a process in which a secondary serving device performs communication with user equipment on a second operation channel in a Wireless Fidelity WiFi mode, a switch request sent by the secondary serving device, where the switch request is used to request that the secondary serving device needs to switch a communication mode; and

a sending module 1202, configured to send a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold.

Optionally, the identifier of the first operation channel is an identifier of a downlink channel, or the identifier of the first operation channel includes an identifier of an uplink channel and an identifier of a downlink channel.

Optionally, the serving device 120 is the master base station in multi-stream aggregation or a remote radio unit in carrier aggregation.

This embodiment of the present invention provides a serving device used for channel selection. In a process in which a secondary serving device performs communication with user equipment on a second operation channel in a Wireless Fidelity WiFi mode, the serving device receives a switch request sent by the secondary serving device, where the switch request is used to request that the secondary serving device needs to switch a communication mode. The serving device sends a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold, so as to resolve a problem of applying an unlicensed spectrum to a wireless cellular network.

**Embodiment 9**

An embodiment of the present invention provides a channel selection method, as shown in FIG. 13, the channel selection method includes the following steps:

Step 1301: A secondary serving device acquires a candidate unlicensed channel.

Optionally, the secondary serving device may acquire the candidate unlicensed channel by receiving an identifier of a candidate unlicensed channel sent by a primary serving device or an operation administration and maintenance OAM device.

Optionally, the secondary serving device may acquire the candidate unlicensed channel by receiving an identifier of a manually configured candidate unlicensed channel.

Step 1302: The secondary serving device determines an available unlicensed channel from the candidate unlicensed channel, where the available unlicensed channel is an unlicensed channel that is not interfered or on which a strength of an interference signal is less than an interference detection threshold.

Optionally, the secondary serving device monitors each candidate unlicensed channel; and if no interference signal is detected on any one of the candidate unlicensed channel in a channel availability check time, or a strength of a detected interference signal does not exceed the interference detection threshold, determines the candidate unlicensed channel as the available unlicensed channel.

It should be noted that, to reduce interference of a wireless communications system, some spectrums may be granted to a mobile operator or a mobile technology (such as UMTS/LTE) for use, and the some spectrums are referred to as licensed spectrums (licensed spectrum). In addition, some spectrums may also be allocated to an unlicensed user (such as a home user) for use, and the some spectrums are referred to as unlicensed spectrums (unlicensed spectrum). Using an unlicensed spectrum (unlicensed spectrum) to expand a capacity of a wireless cellular communications system is a possible trend. Currently, a Wireless Fidelity WiFi system works on unlicensed spectrums such as 2.4 GHz and 5 GHz, and 2.4 GHz has been widely applied to ISM.

Step 1303: The secondary serving device acquires a first operation channel from the available unlicensed channel, where the first operation channel is a channel on which the secondary serving device performs communication with user equipment in a wireless cellular network mode.

Optionally, the secondary serving device may send an identifier of the available unlicensed channel to the primary serving device, and receive an identifier of the first operation channel sent by the primary serving device, so as to acquire the first operation channel.

Optionally, the secondary serving device determines the first operation channel from the available unlicensed channel according to a local policy of the secondary serving device.

Further, in a process in which the secondary serving device performs communication with the user equipment on the first operation channel in the wireless cellular network mode, the method further includes:

monitoring, by the secondary serving device, the first operation channel; and if the secondary serving device detects an interference signal on the first operation channel, and/or a strength of a detected interference signal exceeds the interference detection threshold, migrating, by the secondary serving device, the user equipment to another channel and/or closing the first operation channel.

Optionally, if the secondary serving device detects an interference signal on the first operation channel, and/or a strength of a detected interference signal exceeds the interference detection threshold, a timer is started; when the timer runs, the secondary serving device migrates the user equipment to another channel; and after the timer expires, the secondary serving device closes the first operation channel.

Optionally, when the secondary serving device detects an interference signal on the first operation channel, and/or a strength of a detected interference signal exceeds the interference detection threshold, an interference indication is sent to the primary serving device, where the interference indication is used to indicate that the secondary serving device detects an interference signal, and/or a strength of an interference signal detected by the secondary serving device exceeds the interference detection threshold; and the secondary serving device receives an operation command sent by the primary serving device and executes the operation command, where the operation command is used to notify the secondary serving device of migrating the user equipment to another channel and/or closing the first operation channel.

Further, the secondary serving device further supports a Wireless Fidelity WiFi mode, and before the secondary serving device acquires the candidate unlicensed channel, the method further includes:

monitoring, by the secondary serving device, a second operation channel on which the secondary serving device performs communication with the user equipment in the WiFi mode; if an interference signal is detected on the second operation channel, and/or a strength of a detected interference signal exceeds the interference detection threshold, or it is detected that the second operation channel is busy, sending a switch request to the primary serving device, where the switch request is used to request that the secondary serving device needs to switch a communication mode; and receiving, by the secondary serving device, a request reply sent by the primary serving device, where the request reply is used to instruct the secondary serving device to switch to the wireless cellular network mode.

It should be noted that the secondary serving device in this embodiment is a secondary base station in multi-stream aggregation or a remote radio unit in carrier aggregation, and the primary serving device is a master base station in the multi-stream aggregation or a remote radio unit in the carrier aggregation, where the remote radio unit may be an RRU (Radio Remote Unit) or an RRH (Remote Radio Head).

This embodiment of the present invention provides a channel selection method. A secondary serving device acquires a candidate unlicensed channel; determines an available unlicensed channel from the candidate unlicensed channel, where the available unlicensed channel is an unlicensed channel that is not interfered or on which a strength of an interference signal is less than an interference detection threshold; and acquires a first operation channel from the available unlicensed channel, where the first operation channel is a channel on which the serving device performs communication with user equipment in a wireless cellular network mode, so as to resolve a problem of applying an unlicensed spectrum to a wireless cellular network.

**Embodiment 10**

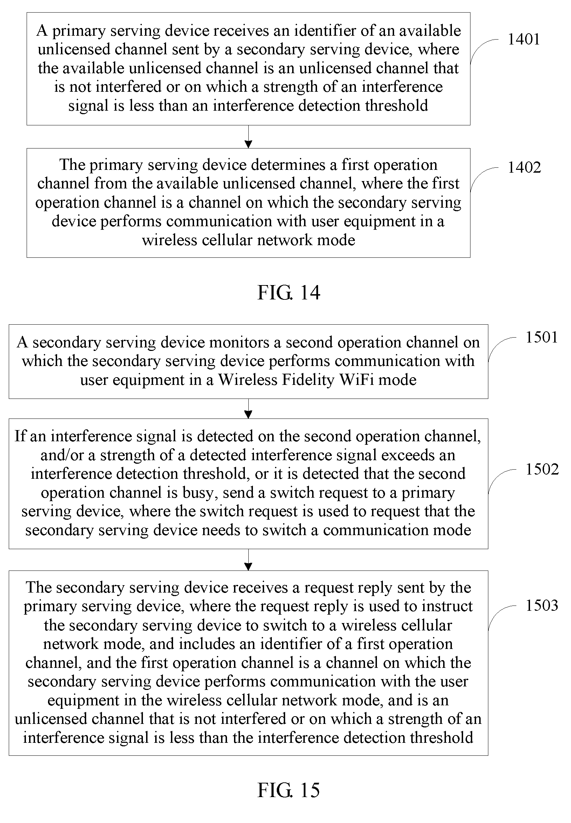

An embodiment of the present invention provides a channel selection method, as shown in FIG. 14, the channel selection method includes the following steps:

Step 1401: A primary serving device receives an identifier of an available unlicensed channel sent by a secondary serving device, where the available unlicensed channel is an unlicensed channel that is not interfered or on which a strength of an interference signal is less than an interference detection threshold.

Optionally, the primary serving device may receive identifiers of available unlicensed channels sent by multiple devices, where the multiple devices include at least one secondary serving device and/or at least one WiFi device.

Step 1402: The primary serving device determines a first operation channel from the available unlicensed channel, where the first operation channel is a channel on which the secondary serving device performs communication with user equipment in a wireless cellular network mode.

Optionally, the primary serving device may determine the first operation channel from the available unlicensed channel according to a local policy.

Optionally, the primary serving device may determine the first operation channel from the available unlicensed channels according to the identifiers of the available unlicensed channels sent by the multiple devices.

Further, after the primary serving device determines the first operation channel from the available unlicensed channel, the method further includes: sending, by the primary serving device, an identifier of the first operation channel to the secondary serving device.

Further, before the primary serving device receives the identifier of the available unlicensed channel sent by the secondary serving device, the method further includes:

acquiring, by the primary serving device, a candidate unlicensed channel configured by an operation administration and maintenance OAM device, or acquiring a manually configured candidate unlicensed channel; and sending, by the primary serving device, an identifier of the candidate unlicensed channel to the secondary serving device.

Further, after the primary serving device sends the identifier of the first operation channel to the secondary serving device, the method further includes:

receiving, by the primary serving device, an interference indication sent by the secondary serving device, where the interference indication is used to indicate that the secondary serving device detects an interference signal, and/or a strength of a detected interference signal exceeds the interference detection threshold; and sending, by the primary serving device, an operation command to the secondary serving device, where the operation command is used to notify the secondary serving device of migrating the user equipment to another channel and/or closing the first operation channel.

Further, the secondary serving device further supports a Wireless Fidelity WiFi mode, and before the primary serving device receives the identifier of the available unlicensed channel sent by the secondary serving device, the method further includes:

in a process in which the secondary serving device performs communication with the user equipment on a second operation channel in the WiFi mode, receiving, by the primary serving device, a switch request sent by the secondary serving device, where the switch request is used to request that the secondary serving device needs to switch a communication mode; and sending, by the primary serving device, a request reply to the secondary serving device, where the request reply is used to instruct the secondary serving device to switch to the wireless cellular network mode.

It should be noted that the primary serving device in this embodiment of the present invention is a master base station in multi-stream aggregation or a remote radio unit in carrier aggregation, and the secondary serving device is a secondary base station in the multi-stream aggregation or a remote radio unit in the carrier aggregation, where the remote radio unit may be an RRU (Radio Remote Unit) or an RRH (Remote Radio Head).

This embodiment of the present invention provides a channel selection method. A primary serving device receives an identifier of an available unlicensed channel sent by a secondary serving device, where the available unlicensed channel is an unlicensed channel that is not interfered or on which a strength of an interference signal is less than an interference detection threshold; and determines a first operation channel from the available unlicensed channel, where the first operation channel is a channel on which the secondary serving device performs communication with user equipment in a wireless cellular network mode, so as to resolve a problem of applying an unlicensed spectrum to a wireless cellular network.

**Embodiment 11**

An embodiment of the present invention provides a channel selection method, as shown in FIG. 15, the channel selection method includes the following steps:

Step 1501: A secondary serving device monitors a second operation channel on which the secondary serving device performs communication with user equipment in a Wireless Fidelity WiFi mode.
Step 1502: If an interference signal is detected on the second operation channel, and/or a strength of a detected interference signal exceeds an interference detection threshold, or it is detected that the second operation channel is busy, send a switch request to a primary serving device, where the switch request is used to request that the secondary serving device needs to switch a communication mode.

The secondary service base station may send the switch request to the primary serving device by using an interface between the secondary service base station and the primary service base station, or send the switch request to the primary serving device by using an air interface.
Step 1503: The secondary serving device receives a request reply sent by the primary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than the interference detection threshold.
The identifier of the first operation channel is an identifier of a downlink channel, or the identifier of the first operation channel includes an identifier of an uplink channel and an identifier of a downlink channel. The identifier of the downlink channel is an identifier of a channel on which the primary serving device sends data to the secondary serving device; the identifier of the uplink channel and the identifier of the downlink channel include an identifier of a channel on which the primary serving device sends data to the secondary serving device and an identifier of a channel on which the secondary serving device sends data to the primary serving device.
It should be noted that the secondary serving device is a secondary base station in multi-stream aggregation, and the primary serving device is a master base station in the multi-stream aggregation.
This embodiment of the present invention provides a channel selection method. A secondary serving device monitors a second operation channel on which the secondary serving device performs communication with user equipment in a Wireless Fidelity WiFi mode; and if an interference signal is detected on the second operation channel, and/or a strength of a detected interference signal exceeds an interference detection threshold, or it is detected that the second operation channel is busy, the secondary serving device sends a switch request to a primary serving device, where the switch request is used to request that the secondary serving device needs to switch a communication mode. The secondary serving device receives a request reply sent by the primary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than the interference detection threshold, so as to resolve a problem of applying an unlicensed spectrum to a wireless cellular network.

**Embodiment 12**

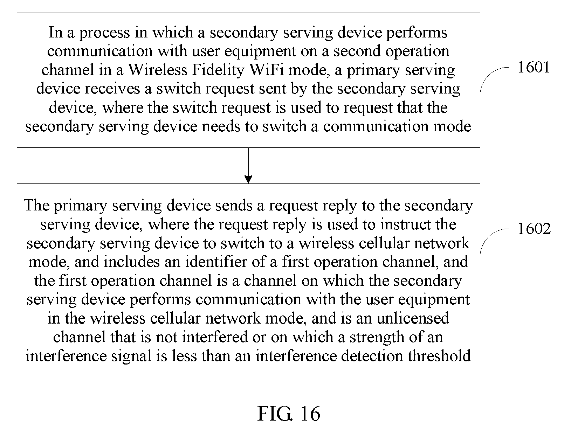

An embodiment of the present invention provides a channel selection method, as shown in FIG. 16, the channel selection method includes:

Step 1601: In a process in which a secondary serving device performs communication with user equipment on a second operation channel in a Wireless Fidelity WiFi mode, a primary serving device receives a switch request sent by the secondary serving device, where the switch request is used to request that the secondary serving device needs to switch a communication mode.

The primary service base station may receive the switch request sent by the secondary serving device by using an interface between the primary service base station and the secondary service base station, or receive the switch request sent by the secondary serving device by using an air interface.

Step 1602: The primary serving device sends a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold.

The identifier of the first operation channel is an identifier of a downlink channel, or the identifier of the first operation channel includes an identifier of an uplink channel and an identifier of a downlink channel. The identifier of the downlink channel is an identifier of a channel on which the primary serving device sends data to the secondary serving device; the identifier of the uplink channel and the identifier of the downlink channel include an identifier of a channel on which the primary serving device sends data to the secondary serving device and an identifier of a channel on which the secondary serving device sends data to the primary serving device.

It should be noted that the secondary serving device is a secondary base station in multi-stream aggregation, and the primary serving device is a master base station in the multi-stream aggregation.

This embodiment of the present invention provides a channel selection method. In a process in which a primary serving device performs communication with user equipment on a second operation channel in a Wireless Fidelity WiFi mode, the primary serving device receives a switch request sent by a secondary serving device, where the switch request is used to request that the secondary serving device needs to switch a communication mode. The primary serving device sends a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold, so as to resolve a problem of applying an unlicensed spectrum to a wireless cellular network.

**Embodiment 13**

An embodiment of the present invention provides a channel selection method, and a DC/MSA technology is used as an example, where a primary serving device (that is, a master base station) works on a licensed spectrum, and a secondary serving device (that is, a secondary base station) works on a license-free spectrum.

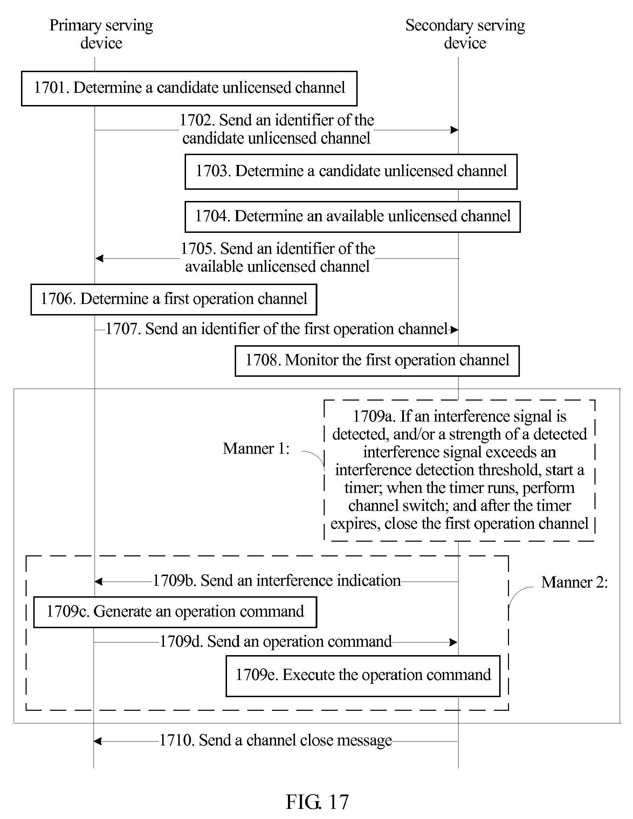

For the foregoing scenario, as shown in FIG. 17, steps of the channel selection method include:

Step 1701: The primary serving device determines a candidate unlicensed channel configured by an operation administration and maintenance OAM device, or determines a manually configured candidate unlicensed channel.

Specifically, the primary serving device may receive the candidate unlicensed channel sent by the operation administration and maintenance (Operation Administration and Maintenance, OAM for short) device, and then determine a candidate unlicensed channel of the secondary serving device; or receive the candidate unlicensed channel manually configured by a user, and then determine a candidate unlicensed channel of the secondary serving device.

Exemplarily, a frequency channel number of a license-free candidate channel of 5 GHz may be obtained by means of calculation according to the following formula:

$$Fc=5000 \text{ MHz}+(\text{channel bandwidth*channel identifier})$$

Fc is a frequency channel number of each candidate unlicensed channel, a channel bandwidth is a channel bandwidth occupied by each candidate unlicensed channel, a channel identifier is used to identify each candidate unlicensed channel, and the channel identifier may be a channel number (Channel Number), but it is not limited thereto.

It is assumed that a channel bandwidth of each candidate unlicensed channel is 10 MHz, and a channel identifier is a channel number; according to the foregoing formula for calculating the frequency channel number of the license-free candidate channel of 5 GHz, a frequency channel number of each candidate unlicensed channel in frequency bands of 5470-5725 MHz shown in the following table 1 is obtained by means of calculation:

**Table 1**

| Channel identifier | Frequency (Frequency/MHz) |
|---|---|
| 49 | 5490-5500 |
| 50 | 5500-5510 |
| 51 | 5510-5520 |
| ... | |
| 66 | 6660-5670 |

Step 1702: The primary serving device sends an identifier of the candidate unlicensed channel to the secondary serving device.

Exemplarily, the primary serving device may send a channel number of the candidate unlicensed channel to the secondary serving device, such as {49, 50, 51, ...}. The primary serving device may send the identifier of the candidate unlicensed channel to the secondary serving device based on an existing X2 interface message; for example, identifier information of the candidate unlicensed channel is added to an X2 interface establishment request or an evolved NodeB (Evolution Node B, eNB for short) configuration update request, and then the X2 interface establishment request or the evolved NodeB configuration update request is sent to the secondary serving device. Alternatively, a newly added message such as an availability frequency check initiation message (Availability Channel Initiation) may be used to carry the identifier of the candidate unlicensed channel, and then sent to the secondary serving device.

Furthermore, in addition to the identifier of the candidate unlicensed channel, the primary serving device may further send a message that carries relevant configuration information of channel availability check (Channel Availability Check, CAC for short) to the secondary serving device. The relevant configuration information may include a channel availability check time (Channel Availability Check Time) and an interference detection threshold (Interference Detection Threshold). When the channel availability check time is used by the secondary serving device to determine, by monitoring, whether an interference signal exists on the candidate unlicensed channel provided by the primary serving device, a monitoring time at least lasts for the channel availability check time. The interference detection threshold is used by the secondary serving device to detect and determine whether an interference signal (such as a radar signal) exists; if a strength of a detected interference signal is greater than or equal to the interference detection threshold, it is determined that interference exists, otherwise, it is determined that interference does not exist.

Step 1703: The secondary serving device determines a candidate unlicensed channel.

Specifically, the secondary serving device determines the candidate unlicensed channel according to the identifier of the candidate unlicensed channel sent by the primary serving device.

Step 1704: The secondary serving device determines an available unlicensed channel from the candidate unlicensed channel, where the available unlicensed channel is an unlicensed channel that is not interfered or on which a strength of an interference signal is less than an interference detection threshold.

Specifically, the secondary serving device determines the available unlicensed channel from the determined candidate unlicensed channel according to the relevant configuration information of the channel availability check sent by the primary serving device. The secondary serving device may determine the available unlicensed channel from the candidate unlicensed channel by using different methods.

Optionally, the secondary serving device may sequentially detect each candidate unlicensed channel according to a list (as shown in Table 1) of candidate unlicensed channels provided by the primary serving device. Specifically, if the secondary serving device detects no interference signal in the channel availability check time, or a strength of a detected interference signal does not exceed the interference detection threshold provided by the primary serving device, the channel is available; otherwise, the channel is unavailable. According to the foregoing method, the secondary serving device may sequentially detect each candidate unlicensed channel according to the list of the candidate unlicensed channels provided by the primary serving device. Certainly, the secondary serving device may alternatively detect multiple candidate unlicensed channels at the same time according to the foregoing method, so as to determine the available unlicensed channel from the candidate unlicensed channels.

Step 1705: The secondary serving device sends an identifier of the determined available unlicensed channel or an identifier list of unlicensed channels to the primary serving device; correspondingly, the primary serving device receives the identifier of the available unlicensed channel or the identifier list of the unlicensed channels sent by the secondary serving device, where the available unlicensed channel is an unlicensed channel that is not interfered or on which a strength of an interference signal is less than the interference detection threshold.

Optionally, the secondary serving device may send the identifier of the available unlicensed channel or the identifier list of the unlicensed channels to the primary serving device based on an existing X2 interference message; for example, the identifier of the determined available unlicensed channel or the identifier list of the unlicensed channels is sent to the primary serving device by using an X2 interference establishment response message or an eNB configuration update response message. Alternatively, a newly added message may be used to carry the identifier of the available unlicensed channel or a message of the identifier list of the unlicensed channels (Availability Channel Lists), and then sent to the primary serving device.

Step 1706: The primary serving device determines a first operation channel from the available unlicensed channel, where the first operation channel is a channel on which the secondary serving device performs communication with user equipment in a wireless cellular network mode.

Optionally, the primary serving device may determine the first operation channel from the identifier of the available unlicensed channel or the identifier list of the unlicensed channels according to a local policy of the primary serving device. For example, a priority of a channel is configured on the primary serving device, and a channel with a high priority is preferably selected as the first operation channel from the available unlicensed channel sent by the secondary serving device.

Optionally, the primary serving device determines, according to identifiers of available unlicensed channels sent by at least two devices or identifier lists of unlicensed channels sent by at least two devices, the first operation channel from the available unlicensed channels sent by the secondary serving device, where the at least two devices include the secondary serving device, another secondary serving device, and/or a WiFi device. For example, the primary serving device allocates first operation channels to secondary serving devices according to identifiers of available unlicensed channels sent by at least two secondary serving devices. An allocation principle is to avoid interference in a same area as much as possible; for example, adjacent secondary serving devices work on different unlicensed channels, so as to avoid co-channel interference between the secondary serving devices.

Step 1707: The primary serving device sends an identifier of the first operation channel to the secondary serving device, so that the secondary serving device performs operation on the first operation channel, and enters an in-service (In-Service) state.

The primary serving device may add the identifier of the first operation channel to a configuration update message, and send the configuration update message to the secondary serving device. The configuration update message may include: an in-service channel check configuration, where the in-service channel check configuration includes a channel availability check period (Channel Availability Check Period) and an interference detection threshold (Interference Detection Threshold), and when the secondary serving device performs operation on the first operation channel, the channel availability check period and the interference detection threshold are used to periodically detect the channel to determine whether an interference signal exists or whether an interference signal exceeds the interference detection threshold, so as to determine availability of the first operation channel; a channel switch time (Channel Move Time), where the channel switch time refers to a time from detection of an interference signal to final closing of the first operation channel; and a non-occupancy time (Non-Occupancy Time), where the non-occupancy time refers to a time that cannot be used after the first operation channel is closed due to interference.

Exemplarily, a typical time configuration for each parameter in the foregoing configuration update message is shown in Table 2:

**Table 2**

| Parameter | Size |
|---|---|
| Minimum channel availability check period | 60 seconds or 10 minutes |
| Channel switch time | 10 seconds (maximum) |
| Interference detection threshold | -64 dBm |
| Non-occupancy time | 30 minutes |

In Table 2, the minimum channel availability check period is 60 seconds or 10 minutes, that is, the availability of the first operation channel is checked every 60 seconds or every 10 minutes; the maximum channel switch time is 10 seconds, that is, channel switch needs to be completed in 10 seconds; and the interference detection threshold is -64 dBm, and the non-occupancy time is 30 minutes, that is, when an interference signal is detected on the first operation channel, or a strength of an interference signal exceeds the interference detection threshold, timing of the non-occupancy time is started after the secondary serving device migrates the user equipment to another channel and/or closes the first operation channel, and in this case, the first operation channel is unavailable during the non-occupancy time. Certainly, the time configuration in Table 2 for each parameter in the configuration update message is only an example, and another time value is also available and falls within the protection scope of embodiments of the present invention.

Step 1708: After entering the in-service state, the secondary serving device monitors the first operation channel.

Specifically, after entering the in-service state, the secondary serving device monitors the first operation channel to determine whether an interference signal exists, and/or whether a strength of a detected interference signal exceeds the interference detection threshold.

If the secondary serving device determines, by monitoring, that there is no interference signal on the first operation channel, and/or a strength of a detected interference signal does not exceed the interference detection threshold, the secondary serving device continues to perform operation on the first operation channel.

If the secondary serving device detects an interference signal on the first operation channel, and/or a strength of a detected interference signal exceeds the interference detection threshold, step 1709 is performed.

Step 1709: If the secondary serving device detects an interference signal on the first operation channel, and/or a strength of a detected interference signal exceeds the interference detection threshold, the secondary serving device migrates the user equipment to another channel and/or closes the first operation channel.

The secondary serving device may migrate the user equipment to another channel and/or close the first operation channel according to a local configuration policy, or migrate the user equipment to another channel and/or close the first operation channel according to an operation command of the primary serving device.

Specifically, when the secondary serving device migrates the user equipment to another channel and/or closes the first operation channel according to the local configuration policy, step 1709a is performed; and when the secondary serving device migrates the user equipment to another channel and/or closes the first operation channel according to the operation command of the primary serving device, steps 1709b to 1709d are performed.

Step 1709a: When the secondary serving device detects an interference signal on the first operation channel, and/or a strength of a detected interference signal exceeds the interference detection threshold, start a timer; when the timer runs, the secondary serving device performs channel switch and migrates the user equipment to another channel; and after the timer expires, the secondary serving device closes the first operation channel.

Timing duration of the timer is the same as duration of channel switch.

Optionally, when the secondary serving device detects an interference signal on the first operation channel, and/or a strength of a detected interference signal exceeds the interference threshold, the secondary serving device immediately performs channel switch and migrates the user equipment to another channel, and after migrating the user equipment to another channel, the secondary serving device immediately closes the first operation channel.

Step 1709b: When the secondary serving device detects an interference signal on the first operation channel, and/or a strength of a detected interference signal exceeds the interference detection threshold, send an interference indication to the primary serving device, and correspondingly, the primary serving device receives the interference indication sent by the secondary serving device.

The interference indication is used to indicate that the secondary serving device detects an interference signal, and/or a strength of a detected interference signal exceeds the interference detection threshold.

Step 1709c: The primary serving device sends an operation command to the secondary serving device according to the interference indication sent by the secondary serving device, and correspondingly, the secondary serving device receives the operation command sent by the primary serving device.

The operation command is used to notify the secondary serving device of migrating the user equipment to another channel and/or closing the first operation channel.

Step 1709d: The secondary serving device executes the operation command sent by the primary serving device.

After the secondary serving device migrates the user equipment to another channel and/or closes the first operation channel, step 1710 is performed.

Step 1710: The secondary serving device sends a channel close message to the primary serving device, so that the primary serving device learns that the first operation channel is unavailable.

The secondary serving device may notify the primary serving device by using an X2 interference establishment response message or an eNB configuration update response message.

Further, the secondary serving device or the primary serving device starts to time the non-occupancy time of the first operation channel, and the first operation channel may not be monitored continually for being used by the secondary serving device until the non-occupancy time expires.

Optionally, the secondary serving device may directly acquire the candidate unlicensed channel configured by the OAM device, or acquire the manually configured candidate unlicensed channel, without sending by the primary serving device.

Optionally, the secondary serving device may determine the first operation channel from the available unlicensed channel, and send the identifier of the determined first operation channel to the primary serving device, so that the primary serving device learns that the secondary serving device determines the first operation channel, without determining the first operation channel from the available unlicensed channel by the primary serving device.

Optionally, the use equipment may determine the available unlicensed channel from the candidate unlicensed channel. The secondary serving device or the primary serving device may send, to the user equipment, the candidate unlicensed channel and the relevant configuration information of the channel availability check that are sent by the primary serving device, and the user equipment may sequentially detect each candidate unlicensed channel according to a list of the candidate unlicensed channels provided by the secondary serving device or the primary serving device. Specifically, if the user equipment detects no interference signal in the channel availability check time, or a strength of a detected interference signal does not exceed the interference detection threshold provided by the secondary serving device or the primary serving device, the channel is available; otherwise, the channel is unavailable. According to the foregoing method, the user equipment may sequentially detect each candidate unlicensed channel according to the list of the candidate unlicensed channels provided by the secondary serving device. Certainly, the user equipment may alternatively detect multiple candidate unlicensed channels at the same time according to the foregoing method, so as to determine the available unlicensed channel from the candidate unlicensed channels. Further, the user equipment sends, to the secondary serving device or the primary serving device, information about the available unlicensed channel determined from the candidate unlicensed channels, and then the secondary serving device determines the available unlicensed channel from the candidate unlicensed channels.

This embodiment of the present invention provides a channel selection method. A primary serving device determines a candidate unlicensed channel, and sends an identifier of the determined candidate unlicensed channel to a secondary serving device; the secondary serving device determines an available unlicensed channel from the candidate unlicensed channel, and sends an identifier of the determined available unlicensed channel to the primary serving device; and the primary serving device determines a first operation channel from the available unlicensed channel, so that the secondary serving device performs operation on the first operation channel, and enters an in-service state. Further, after entering the in-service state, the secondary serving device monitors the first operation channel; and if the secondary serving device detects an interference signal on the first operation channel, and/or a strength of a detected interference signal exceeds an interference detection threshold, the secondary serving device migrates user equipment to another channel and/or closes the first operation channel, so as to resolve a problem of applying an unlicensed spectrum to a wireless cellular network.

## Embodiment 14

An embodiment of the present invention provides a channel selection method, and a scenario in this embodiment is the same as the scenario in the foregoing Embodiment 9. A dual connectivity/multiple stream technology is used as an example, where a primary serving device (that is, a master base station) works on a licensed spectrum, a secondary serving device (that is, a secondary base station) works on a license-free spectrum, and the secondary serving device may work in a WiFi mode, or work in an unlicensed wireless cellular network mode; therefore, the secondary serving device may switch between the WiFi mode and the unlicensed wireless cellular network mode.

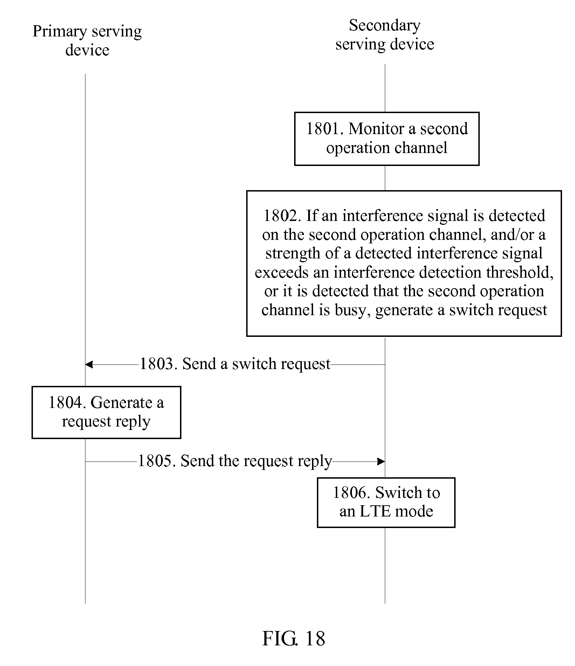

In a process in which the secondary serving device performs communication with user equipment on a second operation channel in the WiFi mode, when the secondary serving device monitors the second operation channel and detects an interference signal on the second operation channel, and/or a strength of a detected interference signal exceeds an interference detection threshold, or detects that the second operation channel is busy, the secondary serving device needs to switch between the WiFi mode and the unlicensed wireless cellular network mode. As shown in FIG. 18, the channel selection method provided in this embodiment includes the following steps:

Step 1801: In a process in which a secondary serving device performs communication with user equipment on a second operation channel in a WiFi mode, the secondary serving device monitors the second operation channel.

Specifically, in the process in which the secondary serving device performs communication with the user equipment on the second operation channel in the WiFi mode, the secondary serving device monitors the second operation channel and detects whether an interference signal exists on the second operation channel, and/or whether a strength of a detected interference signal exceeds an interference detection threshold, or detects whether the second operation channel is busy.

If no interference signal is detected on the second operation channel, and/or a strength of a detected interference signal does not exceed the interference detection threshold, or it is detected that the second operation channel is idle, the secondary serving device continues to monitor the second operation channel.

If an interference signal is detected on the second operation channel, and/or a strength of a detected interference signal exceeds the interference detection threshold, or it is detected that the second operation channel is busy, steps 1802 to 1806 are performed.

Step 1802: If an interference signal is detected on the second operation channel, and/or a strength of a detected interference signal exceeds an interference detection threshold, or it is detected that the second operation channel is busy, generate a switch request, where the switch request is used to request that the secondary serving device needs to switch a communication mode.

Step 1803: The secondary serving device sends the switch request to the primary serving device, and correspondingly, the primary serving device receives the switch request sent by the secondary serving device.

Step 1804: The primary serving device generates a request reply according to the received switch request.

The request reply is used to instruct the secondary serving device to switch to a wireless cellular network mode, and includes an identifier of a first operation channel, where the identifier of the first operation channel is an identifier of a downlink channel, and the first operation channel is a channel on which the secondary serving device performs communication with the user equipment in the wireless cellular network mode, and is an unlicensed channel that is not interfered or on which a strength of an interference signal is less than the interference detection threshold.

Optionally, the identifier of the first operation channel may be an identifier of a downlink channel, or the identifier of the first operation channel includes an identifier of an uplink channel and an identifier of a downlink channel.

Step 1805: The primary serving device sends the request reply to the secondary serving device, and correspondingly, the secondary serving device receives the request reply sent by the primary serving device.

Step 1806: The secondary serving device switches to a wireless cellular network mode.

Optionally, when the secondary serving device switches to the wireless cellular network mode, the first operation channel required after switching to the wireless cellular network mode may be determined according to the channel selection method described in Embodiment 13; for specific steps, reference is made to steps of the channel selection method described in Embodiment 13, and details are not described herein again.

This embodiment of the present invention provides a channel selection method. In a process in which a secondary serving device performs communication with user equipment on a second operation channel in a WiFi mode, the secondary serving device monitors the second operation channel; and if an interference signal is detected on the second operation channel, and/or a strength of a detected interference signal exceeds an interference detection threshold, or it is detected that the second operation channel is busy, a switch request is sent to a primary serving device, and the primary serving device sends a request reply to the secondary serving device according to the switch request, so that the secondary serving device switches from the WiFi mode to a license-free wireless cellular network mode. A method for determining a first operation channel by the primary serving device or the secondary serving device is used, so as to resolve a problem of applying an unlicensed spectrum to a wireless cellular network.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A serving device, comprising:

    an acquiring module, configured to acquire a candidate unlicensed channel; and
    a determining module, configured to determine an available unlicensed channel from the candidate unlicensed channel obtained by the acquiring module, wherein the available unlicensed channel is an unlicensed channel that is not interfered or on which a strength of an interference signal is less than an interference detection threshold; wherein

    the acquiring module is further configured to acquire a first operation channel from the available unlicensed channel obtained by the determining module, wherein the first operation channel is a channel on which the serving device performs communication with user equipment in a wireless cellular network mode.

2. The serving device according to claim 1, wherein
the serving device further comprises a receiving module, and the receiving module is configured to receive an identifier of a candidate unlicensed channel sent by a primary serving device or an operation administration and maintenance OAM device, or receive an identifier of a manually configured candidate unlicensed channel; and
the acquiring module is specifically configured to:

    acquire the candidate unlicensed channel according to the identifier of the candidate unlicensed channel received by the receiving module; and
    acquire the first operation channel from the available unlicensed channel.

3. The serving device according to claim 1 or 2, wherein the serving device further comprises a monitoring module, and the monitoring module is configured to monitor each candidate unlicensed channel; and
the determining module is specifically configured to:

    if the monitoring module detects no interference signal on any one of the candidate unlicensed channel in a channel availability check time, or a strength of a detected interference signal does not exceed the interference detection threshold, determine the candidate unlicensed channel as the available unlicensed channel.

4. The serving device according to claim 2 or 3, wherein
the serving device further comprises a sending module, and the sending module is configured to send an identifier of the available unlicensed channel to the primary serving device;
the receiving module is further configured to receive an identifier of the first operation channel sent by the primary serving device; and
the acquiring module is specifically configured to:

    acquire the candidate unlicensed channel according to the identifier of the candidate unlicensed channel received by the receiving module; and
    determine the first operation channel from the available unlicensed channel according to the identifier of the first operation channel received by the receiving module, or determine the first operation channel from the available unlicensed channel according to a local policy.

5. The serving device according to claim 3 or 4, wherein the serving device further comprises a processing module; the monitoring module is further configured to monitor the first operation channel; and the processing module is configured to: if the monitoring module detects an interference signal on the first operation channel, and/or a strength of a detected interference signal exceeds the interference detection threshold, migrate the user equipment to another channel and/or close the first operation channel.

6. The serving device according to any one of claims 3 to 5, wherein the serving device further supports a Wireless Fidelity WiFi mode; the monitoring module is further configured to monitor a second operation channel on which the serving device performs communication with the user equipment in the WiFi mode; the sending module is further configured to: if the monitoring module detects an interference signal on the second operation channel, and/or a strength of a detected interference signal exceeds the interference detection threshold, or detects that the second operation channel is busy, send a switch request to the primary serving device, wherein the switch request is used to request that the serving device needs to switch a communication mode; and the receiving module is further configured to receive a request reply sent by the primary serving device, wherein the request reply is used to instruct the serving device to switch to the wireless cellular network mode.

7. The serving device according to any one of claims 1 to 6, wherein:

the serving device is a secondary base station in multi-stream aggregation or a remote radio unit in carrier aggregation.

8. A serving device, comprising:

a receiving module, configured to receive an identifier of an available unlicensed channel sent by a secondary serving device, wherein the available unlicensed channel is an unlicensed channel that is not interfered or on which a strength of an interference signal is less than an interference detection threshold; and a determining module, configured to determine a first operation channel from the available unlicensed channel, wherein the first operation channel is a channel on which the secondary serving device performs communication with user equipment in a wireless cellular network mode.

9. The serving device according to claim 8, wherein the serving device further comprises a sending module, and the sending module is configured to send an identifier of the first operation channel to the secondary serving device.

10. The serving device according to claim 8 or 9, wherein the receiving module is specifically configured to receive identifiers of available unlicensed channels sent by multiple devices, wherein the multiple devices comprise at least one secondary serving device and/or at least one WiFi device.

11. The serving device according to claim 9 or 10, wherein the serving device further comprises an acquiring module, and the acquiring module is configured to acquire a candidate unlicensed channel configured by an operation administration and maintenance OAM device, or acquire a manually configured candidate unlicensed channel; and the sending module is further configured to send an identifier of the candidate unlicensed channel obtained by the acquiring module to the secondary serving device.

12. The serving device according to any one of claims 8 to 11, wherein the determining module is specifically configured to:

determine the first operation channel from the available unlicensed channel according to a local policy, or determine the first operation channel from the available unlicensed channels according to the identifiers of the available unlicensed channels sent by the multiple devices.

13. The serving device according to any one of claims 9 to 12, wherein the receiving module is further configured to receive an interference indication sent by the secondary serving device, wherein the interference indication is used to indicate that the secondary serving device detects an interference signal, and/or a strength of a detected interference signal exceeds the interference detection threshold; and the sending module is further configured to send an operation command to the secondary serving device, wherein the operation command is used to notify the secondary serving device of migrating the user equipment to another channel and/or closing the first operation channel.

14. The serving device according to any one of claims 9 to 13, wherein the secondary serving device further supports a Wireless Fidelity WiFi mode;
the receiving module is further configured to receive, in a process in which the secondary serving device performs communication with the user equipment on a second operation channel in the WiFi mode, a switch request sent by the secondary serving device, wherein the switch request is used to request that the secondary serving device needs to switch a communication mode; and
the sending module is further configured to send a request reply to the secondary serving device, wherein the request reply is used to instruct the secondary serving device to switch to the wireless cellular network mode.

15. The serving device according to any one of claims 8 to 14, wherein
the serving device is a master base station in multi-stream aggregation or a remote radio unit in carrier aggregation.

16. A channel selection method, comprising:

acquiring, by a secondary serving device, a candidate unlicensed channel;
determining, by the secondary serving device, an available unlicensed channel from the candidate unlicensed channel, wherein the available unlicensed channel is an unlicensed channel that is not interfered or on which a strength of an interference signal is less than an interference detection threshold; and
acquiring, by the secondary serving device, a first operation channel from the available unlicensed channel, wherein the first operation channel is a channel on which the secondary serving device performs communication with user equipment in a wireless cellular network mode.

17. The method according to claim 16, wherein the acquiring, by a secondary serving device, a candidate unlicensed channel comprises:

receiving, by the secondary serving device, an identifier of a candidate unlicensed channel sent by a primary serving device or an operation administration and maintenance OAM device, or acquiring, by the secondary serving device, an identifier of a manually configured candidate unlicensed channel.

18. The method according to claim 16 or 17, wherein the determining, by the secondary serving device, an available unlicensed channel from the candidate unlicensed channel comprises:

monitoring, by the secondary serving device, each candidate unlicensed channel; and if no interference signal is detected on any one of the candidate unlicensed channel in a channel availability check time, or a strength of a detected interference signal does not exceed the interference detection threshold, determining the candidate unlicensed channel as the available unlicensed channel.

19. The method according to any one of claims 16 to 18, wherein the acquiring, by the secondary serving device, a first operation channel from the available unlicensed channel comprises:

sending, by the secondary serving device, an identifier of the available unlicensed channel to the primary serving device, and receiving an identifier of the first operation channel sent by the primary serving device, or
determining, by the secondary serving device, the first operation channel from the available unlicensed channel according to a local policy of the secondary serving device.

20. The method according to any one of claims 16 to 19, wherein in a process in which the secondary serving device performs communication with the user equipment on the first operation channel in the wireless cellular network mode, the method further comprises:

monitoring, by the secondary serving device, the first operation channel; and
if the secondary serving device detects an interference signal on the first operation channel, and/or a strength of a detected interference signal exceeds the interference detection threshold, migrating, by the secondary serving device, the user equipment to another channel and/or closing the first operation channel.

21. The method according to claim 20, wherein the migrating, by the secondary serving device, the user equipment to another channel and/or closing the first operation channel comprises:

when the secondary serving device detects an interference signal on the first operation channel, and/or a strength of a detected interference signal exceeds the interference detection threshold, starting a timer; when the timer runs, migrating, by the secondary serving device, the user equipment to another channel; and after the timer expires, closing, by the secondary serving device, the first operation channel; or
when the secondary serving device detects an interference signal on the first operation channel, and/or a strength of a detected interference signal exceeds the interference detection threshold, sending an interference indication to the primary serving device, wherein the interference indication is used to indicate that the secondary serving device detects an interference signal, and/or a strength of an interference signal detected by the secondary serving device exceeds the interference detection threshold; and receiving, by the secondary serving device, an operation command sent by the primary serving device and executing the operation command, wherein the operation command is used to notify the secondary serving device of migrating the user equipment to another channel and/or closing the first operation channel.

22. The method according to any one of claims 16 to 21, wherein the secondary serving device further supports a Wireless Fidelity WiFi mode, and before the acquiring, by a secondary serving device, a candidate unlicensed channel, the method further comprises:

monitoring, by the secondary serving device, a second operation channel on which the secondary serving device performs communication with the user equipment in the WiFi mode;
if an interference signal is detected on the second operation channel, and/or a strength of a detected interference signal exceeds the interference detection threshold, or it is detected that the second operation channel is busy, sending a switch request to the primary serving device, wherein the switch request is used to request that the secondary serving device needs to switch a communication mode; and
receiving, by the secondary serving device, a request reply sent by the primary serving device, wherein the request reply is used to instruct the secondary serving device to switch to the wireless cellular network mode.

23. The method according to any one of claims 16 to 22, wherein
the secondary serving device is a secondary base station in multi-stream aggregation or a remote radio unit in carrier aggregation.

24. The method according to any one of claims 16 to 23, wherein
the primary serving device is a master base station in the multi-stream aggregation or a remote radio unit in the carrier aggregation.

25. A channel selection method, comprising:

receiving, by a primary serving device, an identifier of an available unlicensed channel sent by a secondary serving device, wherein the available unlicensed channel is an unlicensed channel that is not interfered or on which a strength of an interference signal is less than an interference detection threshold; and
determining, by the primary serving device, a first operation channel from the available unlicensed channel, wherein the first operation channel is a channel on which the secondary serving device performs communication with user equipment in a wireless cellular network mode.

26. The method according to claim 25, wherein after the determining, by the primary serving device, a first operation channel from the available unlicensed channel, the method further comprises: sending, by the primary serving device, an identifier of the first operation channel to the secondary serving device.

27. The method according to claim 25 or 26, wherein the receiving, by a primary serving device, an identifier of an available unlicensed channel sent by a secondary serving device comprises:

receiving, by the primary serving device, identifiers of available unlicensed channels sent by multiple devices, wherein the multiple devices comprise at least one secondary serving device and/or at least one WiFi device.

**28.** The method according to any one of claims 25 to 27, wherein before the receiving, by a primary serving device, an identifier of an available unlicensed channel sent by the secondary serving device, the method further comprises:

acquiring, by the primary serving device, a candidate unlicensed channel configured by an operation administration and maintenance OAM device, or acquiring a manually configured candidate unlicensed channel; and
sending, by the primary serving device, an identifier of the candidate unlicensed channel to the secondary serving device.

**29.** The method according to any one of claims 25 to 28, wherein the determining, by the primary serving device, a first operation channel from the available unlicensed channel comprises:

determining, by the primary serving device, the first operation channel from the available unlicensed channel according to a local policy of the primary serving device, or determining the first operation channel from the available unlicensed channels according to the identifiers of the available unlicensed channels sent by the multiple devices.

**30.** The method according to any one of claims 25 to 29, wherein after the sending, by the primary serving device, an identifier of the first operation channel to the secondary serving device, the method further comprises:

receiving, by the primary serving device, an interference indication sent by the secondary serving device, wherein the interference indication is used to indicate that the secondary serving device detects an interference signal, and/or a strength of a detected interference signal exceeds the interference detection threshold; and
sending, by the primary serving device, an operation command to the secondary serving device, wherein the operation command is used to notify the secondary serving device of migrating the user equipment to another channel and/or closing the first operation channel.

**31.** The method according to any one of claims 25 to 30, wherein the secondary serving device further supports a Wireless Fidelity WiFi mode, and before the receiving, by a primary serving device, an identifier of an available unlicensed channel sent by a secondary serving device, the method further comprises:

in a process in which the secondary serving device performs communication with the user equipment on a second operation channel in the WiFi mode, receiving, by the primary serving device, a switch request sent by the secondary serving device, wherein the switch request is used to request that the secondary serving device needs to switch a communication mode; and
sending, by the primary serving device, a request reply to the secondary serving device, wherein the request reply is used to instruct the secondary serving device to switch to the wireless cellular network mode.

**32.** The method according to any one of claims 25 to 31, wherein
the primary serving device is a master base station in multi-stream aggregation or a remote radio unit in carrier aggregation.

**33.** The method according to any one of claims 25 to 32, wherein
the secondary serving device is a secondary base station in the multi-stream aggregation or a remote radio unit in the carrier aggregation.

EP 3 079 423 A1

FIG. 1

FIG. 2

FIG. 3

30

| Receiver 403 | Transmitter 404 | Processor 401 |
| --- | --- | --- |

Memory 402

Bus system 405

Serving device 40

FIG. 4

| Receiver 503 | Transmitter 504 | Processor 501 |
| --- | --- | --- |

Memory 502

Bus system 505

Serving device 50

FIG. 5

| Receiver<br>603 | Transmitter<br>604 | Processor<br>601 |

Bus system 605

Serving device 60

Memory<br>602

FIG. 6

Acquiring module 701

Determining module 702

Serving device 70

FIG. 7

| Acquiring<br>module 701 | | | |
| Determining<br>module 702 | Monitoring<br>module 704 | Processing<br>module 706 |
| | Sending<br>module 705 | |
| Serving device 70 | Receiving<br>module 703 | |

FIG. 8

Receiving module 901

Determining module 902

Serving device 90

**FIG. 9**

Serving device 90

Acquiring module 904

Receiving module 901

Determining module 902

Sending module 903

**FIG. 10**

Monitoring module 1101

Sending module 1102

Receiving module 1103

Serving device 110

**FIG. 11**

```
┌─────────────────────────────────────┐
│  ┌───────────────────────────────┐  │
│  │   Receiving module 1201       │  │
│  └───────────────────────────────┘  │
│          │                           │
│  ┌───────────────────────────────┐  │
│  │   Sending module 1202         │  │
│  └───────────────────────────────┘  │
│        Serving device 120            │
└─────────────────────────────────────┘
```

FIG. 12

```
┌────────────────────────────────────────────┐
│  A secondary serving device acquires a       │  ── 1301
│  candidate unlicensed channel                │
└────────────────────────────────────────────┘
                    │
                    ▼
┌────────────────────────────────────────────┐
│  The secondary serving device determines an  │
│  available unlicensed channel from the        │
│  candidate unlicensed channel, where the      │  ── 1302
│  available unlicensed channel is an           │
│  unlicensed channel that is not interfered or │
│  on which a strength of an interference signal│
│  is less than an interference detection       │
│  threshold                                    │
└────────────────────────────────────────────┘
                    │
                    ▼
┌────────────────────────────────────────────┐
│  The secondary serving device acquires a      │
│  first operation channel from the available   │
│  unlicensed channel, where the first operation│  ── 1303
│  channel is a channel on which the secondary  │
│  serving device performs communication with   │
│  user equipment in a wireless cellular network│
│  mode                                         │
└────────────────────────────────────────────┘
```

FIG. 13

A primary serving device receives an identifier of an available unlicensed channel sent by a secondary serving device, where the available unlicensed channel is an unlicensed channel that is not interfered or on which a strength of an interference signal is less than an interference detection threshold —— 1401

↓

The primary serving device determines a first operation channel from the available unlicensed channel, where the first operation channel is a channel on which the secondary serving device performs communication with user equipment in a wireless cellular network mode —— 1402

FIG. 14

A secondary serving device monitors a second operation channel on which the secondary serving device performs communication with user equipment in a Wireless Fidelity WiFi mode —— 1501

↓

If an interference signal is detected on the second operation channel, and/or a strength of a detected interference signal exceeds an interference detection threshold, or it is detected that the second operation channel is busy, send a switch request to a primary serving device, where the switch request is used to request that the secondary serving device needs to switch a communication mode —— 1502

↓

The secondary serving device receives a request reply sent by the primary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than the interference detection threshold —— 1503

FIG. 15

In a process in which a secondary serving device performs communication with user equipment on a second operation channel in a Wireless Fidelity WiFi mode, a primary serving device receives a switch request sent by the secondary serving device, where the switch request is used to request that the secondary serving device needs to switch a communication mode

1601

The primary serving device sends a request reply to the secondary serving device, where the request reply is used to instruct the secondary serving device to switch to a wireless cellular network mode, and includes an identifier of a first operation channel, and the first operation channel is a channel on which the secondary serving device performs communication with the user equipment in the wireless cellular network mode, and is an unlicensed channel that is not interfered or on which a strength of an interference signal is less than an interference detection threshold

1602

FIG. 16

Primary serving
device

Secondary serving
device

1701. Determine a candidate unlicensed channel

1702. Send an identifier of the
candidate unlicensed channel

1703. Determine a candidate unlicensed channel

1704. Determine an available unlicensed channel

1705. Send an identifier of the
available unlicensed channel

1706. Determine a first operation channel

1707. Send an identifier of the first operation channel

1708. Monitor the first operation channel

Manner 1:

1709a. If an interference signal is
detected, and/or a strength of a detected
interference signal exceeds an
interference detection threshold, start a
timer; when the timer runs, perform
channel switch; and after the timer
expires, close the first operation channel

1709b. Send an interference indication

Manner 2:

1709c. Generate an operation command

1709d. Send an operation command

1709e. Execute the operation command

1710. Send a channel close message

FIG. 17

Primary serving
device

Secondary
serving device

1801. Monitor a second
operation channel

1802. If an interference signal is detected
on the second operation channel, and/or a
strength of a detected interference signal
exceeds an interference detection threshold,
or it is detected that the second operation
channel is busy, generate a switch request

◄————1803. Send a switch request————

1804. Generate a
request reply

————1805. Send the request reply————►

1806. Switch to
an LTE mode

FIG. 18

# INTERNATIONAL SEARCH REPORT

| International application No. |
|---|
| PCT/CN2013/091069 |

**A.　CLASSIFICATION OF SUBJECT MATTER**

H04W 72/04 (2009.01) i

According to International Patent Classification (IPC) or to both national classification and IPC

**B.　FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CPRSABS, CNTXT, VEN: unauthorized, wireless cellular, cellular wireless, determine, select, candidate, identifier, mark, tag, base station, radio frequency remote, multi stream aggregation, carrier aggregation, spectrum, channel, license, authori+, wireless, cellular, network, disturb, interfere

**C.　DOCUMENTS CONSIDERED TO BE RELEVANT**

| Category* | Citation of document, with indication, where appropriate, of the relevant passages | Relevant to claim No. |
|---|---|---|
| X | EP 2675205 A2 (NETGEAR INC.), 18 December 2013 (18.12.2013), description, paragraphs [0001]-[0008] and [0020]-[0043], and figures 1-8 | 1, 8, 9, 16, 25, 26 |
| A | CN 102027795 A (NOKIA SIEMENS NETWORKS), 20 April 2011 (20.04.2011), the whole document | 1-33 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 April 2014 (09.04.2014) | **23 April 2014 (23.04.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **DING, Yu** Telephone No.: (86-10) **62089369** |
|---|---|

Form PCT/ISA/210 (second sheet) (July 2009)

## INTERNATIONAL SEARCH REPORT
Information on patent family members

International application No.

**PCT/CN2013/091069**

| Patent Documents referred in the Report | Publication Date | Patent Family | Publication Date |
|---|---|---|---|
| EP 2675205 A2 | 18 December 2013 | CN 103517456 A | 15 January 2014 |
|  |  | US 2013337821 A1 | 19 December 2013 |
| CN 102027795 A | 20 April 2011 | US 7965681 B2 | 21 June 2011 |
|  |  | EP 2279640 B1 | 31 July 2013 |
|  |  | US 2009285165 A1 | 19 November 2009 |
|  |  | WO 2009138467 A1 | 19 November 2009 |
|  |  | EP 2279640 A1 | 02 February 2011 |
|  |  | CN 102027795 B | 26 March 2014 |

Form PCT/ISA/210 (patent family annex) (July 2009)